# EUROPEAN PATENT SPECIFICATION

(11) **EP 3 524 008 B1**
(45) Date of publication and mention of the grant of the patent: **04.05.2022**
(21) Application number: 17783589.9
(22) Date of filing: 05.10.2017
(51) Int. Cl.: H04W 36/00

(54) **SUPPORT OF SINGLE RADIO VOICE CALL CONTINUITY IN NEXT GENERATION (5G) NETWORKS**
UNTERSTÜTZUNG DER KONTINUITÄT EINZELNER FUNKSPRACHANRUFE IN NETZWERKEN DER NÄCHSTEN GENERATION (5G)
PRISE EN CHARGE DE CONTINUITÉ D'APPEL RADIO VOCAL UNIQUE DANS DES RÉSEAUX DE LA PROCHAINE GÉNÉRATION (5G)

(30) Priority: 07.10.2016 US 201662405543 P
(43) Date of publication of application: 14.08.2019
(73) Proprietor: Telefonaktiebolaget LM Ericsson (publ), 164 83 Stockholm (SE)
(72) Inventor: KELLER, Ralf, 52146 Würselen (DE); MILDH, Gunnar, SE-192 55 Sollentuna (SE); SCHLIWA-BERTLING, Paul, SE-590 71 Ljungsbro (SE); HEDMAN, Peter, SE-252 50 Helsingborg (SE); BOLLE, Aldo, SE-426 79 Västra Frölunda (SE); SANDER, Ann-Christine, SE-417 57 Göteborg (SE)
(74) Representative: Ericsson
(86) International application number: PCT/IB2017/056158
(87) International publication number: WO 2018/065936

(56) References cited:
- WO-A1-2013/127136
- WO-A1-2013/127136
- WO-A1-2016/076591
- WO-A1-2016/076591
- WO-A2-2013/048189
- WO-A2-2013/048189
- ERICSSON: "New RAN Roll Out Scenarios", 3GPP DRAFT; R3-161895, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Göteborg; 20160822 - 20160826 21 August 2016 (2016-08-21), XP051127704, Retrieved from the Internet: URL:http://www.3gpp.org/ftp/Meetings_3GPP_ SYNC/RAN3/Docs/ [retrieved on 2016-08-21]
- INTEL CORPORATION: "Inter-RAT mobility between NR and LTE", 3GPP DRAFT; R2-163581-INTER-RAT-V3, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Nanjing, China; 20160523 - 20160527 22 May 2016 (2016-05-22), XP051105031, Retrieved from the Internet: URL:http://www.3gpp.org/ftp/Meetings_3GPP_ SYNC/RAN2/Docs/ [retrieved on 2016-05-22]
- DEUTSCHE TELEKOM AG: "5G architecture options - full set", 3GPP DRAFT; SP-160464_RP-161266, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , no. Busan; 20160614 16 June 2016 (2016-06-16), XP051108719, Retrieved from the Internet: URL:http://www.3gpp.org/ftp/Meetings_3GPP_ SYNC/SA/Docs/ [retrieved on 2016-06-16] cited in the application
- ERICSSON: "New RAN Roll Out Scenarios", 3GPP DRAFT; R3-161895, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Göteborg; 20160822 - 20160826 21 August 2016 (2016-08-21), XP051127704, Retrieved from the Internet: URL:http://www.3gpp.org/ftp/Meetings_3GPP_ SYNC/RAN3/Docs/ [retrieved on 2016-08-21]
- INTEL CORPORATION: "Inter-RAT mobility between NR and LTE", 3GPP DRAFT; R2-163581-INTER-RAT-V3, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Nanjing, China; 20160523 - 20160527 22 May 2016 (2016-05-22), XP051105031, Retrieved from the Internet: URL:http://www.3gpp.org/ftp/Meetings_3GPP_ SYNC/RAN2/Docs/ [retrieved on 2016-05-22]
- DEUTSCHE TELEKOM AG: "5G architecture options - full set", 3GPP DRAFT; SP-160464_RP-161266, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , no. Busan; 20160614 16 June 2016 (2016-06-16), XP051108719, Retrieved from the Internet: URL:http://www.3gpp.org/ftp/Meetings_3GPP_ SYNC/SA/Docs/ [retrieved on 2016-06-16]

## Description

### Technical Field

This disclosure relates generally to Inter radio access technology handover and more specifically for support of single radio voice call continuity.

### Background

Single Radio Voice Call Continuity, SRVCC, is specified in third generation partnership project technical specification, Third generation Partnership Project Technical specification 23.216, 3GPP TS 23.216. SRVCC is a scheme that enables Inter Radio Access Technology, Inter RAT, handover as well as a handover from packet data to circuit switched, CS, voice calls. Currently, 3GPP TS 23.216 discloses SRVCC between:
1. Evolved Universal Terrestrial Radio Access, EUTRAN/Evolved Packet Core, EPC, network and UTRAN/ General Packet Radio Service, GPRS, and CS network, and
2. EUTRAN/EPC and Global System for Mobile communication, GSM, Enhanced Data rates for Global Evolution, EDGE, Radio Access Network, GERAN/CS network, and
4. UTRAN High Speed Packet Access, HSPA /GPRS and UTRAN or GERAN/CS network and
5. EUTRAN/EPC and circuit switched Code Division Multiplex Access, CDMA/CS network.
Thus, SRVCC enables handovers of voice calls between the above-named RATs while maintaining existing quality of service, QoS, and ensures that call continuity meets the critical requirements for emergency voice calls.

The SRVCC requires the user equipment, UE, to support multiple RATs but is only able to signal on one RAT at a time, hence minimizing the UE design complexity, reduce cost and size and increase battery efficiency when compared to UEs transmitting simultaneously on dual radios.

In addition to required UE functional upgrades to support SRVCC between EUTRAN and 3GPP UTRAN/GERAN, additional functional upgrades are required to the supporting network infrastructure including the Mobility management entity, MME, and the packet data gateway, PGW in the Evolved Packet Core, EPC, the evolved NodeB, eNB, in EUTRAN the Mobile Switching Center, MSC, server, the Home Subscriber Server, HSS, the Policy Control and Charging Rule function, PCRF, Internet Protocol Multimedia Subsystem, IMS, entities such as the proxy Call Session Control Function, PCSCF, and the Access Transfer Control Function, ATCF of the IMS. The functional upgrades consist of the following:

If the UE supports SRVCC from EUTRAN to GERAN/UTRAN, it shall, according to 3GPP TS 24.301, set the SRVCC to GERAN/UTRAN capability bit to "SRVCC from E-UTRAN to GERAN/UTRAN supported" included in the MS Network capability information element, IE, and sent in a Non-Access Stratum, NAS, towards the MME. The NAS message may be an attach request message, a service request message or a tracking area update message. If the service configuration is changed in the UE causing a change in the SRVCC capability the UE sends a tracking area update message to indicate the change, such as that SRVCC is no longer supported.

Additional indications may also be sent from the UE to the eNodeB in a capability information message sent as a radio resource control, RRC, message in accordance with 3GPP TS 36.331. The UE may indicate support for SRVCC in either the IRAT-ParametersUTRA-v9c0 information Element, IE, (Table 1) or the FeatureGroupIndicator IE (Table 2). Both IEs may be included in the RRC message and indicate the UE capabilities for supporting SRVCC handover from EUTRAN to UTRAN CS and/or GERAN CS or from GERAN to EUTRAN as shown in Table 1 and 2 below from 3GPP TS 36.331:

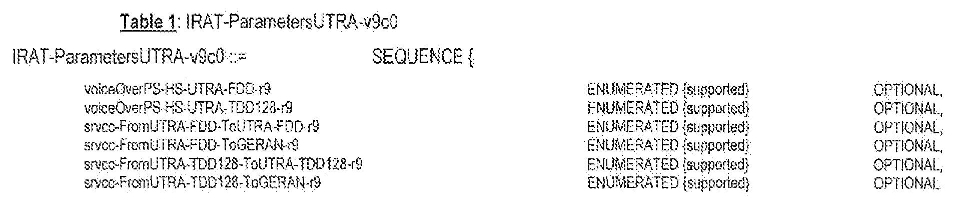

**Table 2: FeatureGroupIndicator**

| **Index of indicator** (bit number) | **Definition** (description of the supported functionality, if indicator set to one) | **Notes** | **If indicated "Yes" the feature shall be implemented and successfully tested for this version of the specification** | ***FDD*/ *TDD diff*** |
|---|---|---|---|---|
| 3 | - 5bit RLC UM SN | - can only be set to 1 if the UE has set bit number 7 to 1. | Yes, if UE supports VoLTE, MCPTT, or both. | No |
| | - 7bit PDCP SN | | | |
| | | | Yes, if UE supports SRVCC to EUTRAN from GERAN. | |
| 7 | - RLC UM | - can only be set to 0 if the UE does neither support VoLTE nor MCPTT | Yes, if UE supports VoLTE, MCPTT, or both. | No |
| | | | Yes, if UE supports SRVCC to EUTRAN from GERAN. | |
| 9 | - EUTRA RRC_CONNECTED to GERAN GSM_Dedicated handover | - related to SR-VCC - can only be set to 1 : if the UE has set bit : number 23 to 1 | Yes (except for category M1 UE), if UE supports SRVCC to EUTRAN from GERAN. | Yes |
| | | | | |

If the NAS attach request message, tracking area update request message or service request message sent from the UE to the MME indicates support for SRVCC in the UE network capability IE, and if the MME supports SRVCC, the MME informs the HSS with the UE SRVCC capability received from the UE. The HSS may use that information for further IMS registration when the UE establishes the voice over IP session over IMS.

Additionally, the MME signals to the eNB an "SRVCC Operation possible" IE to indicate that both the UE and the MME are SRVCC capable. An MME that supports SRVCC is an MME that supports interworking with the MSC over the 3GPP specified Sv interface. The Sv interface is used in the SRVCC handover procedure for handover of the voice component of the established Voice over IP session to the target UTRAN/GERAN cell.

The eNB impacts for supporting SRVCC consist of determining the neighbour cell list based on
- the received "SRVCC Operation possible" indicator from the MME,
- UE indicators (see IRAT-ParametersUTRA-v9c0) received over the RRC interface indicating the UE's Radio Access Capabilities for SRVCC from E-UTRAN to UTRAN/GERAN and PS Voice over UTRAN and/or
- presence of an established Quality of service. QoS, class identifier, QCI=1 bearer for the UE.

Following the attach and the signaling of the SRVCC capability to the eNB and MME, the UE initiates and establishes a voice over IP session over IMS. The voice over IP session is anchored in IMS. The voice over IP bearer established for the UE over the Serving Gateway, SGW, and PGW in the EPC and the eNB, may have a QCI of 1 indicating conversational service with QoS such as guaranteed bit rate, maximum allowable packet error rate and maximum delay requirement. The voice packets are transferred over the established voice over IP bearer.

### SRVCC handover from EUTRAN to UTRAN/GERAN

The SRVCC handover is undertaken in two overlapping phases. The following example of SRVCC procedure is further illustrated in 3GPP TS 23.216, clause 6.2.2.2 "SRVCC from E-UTRAN to UTRAN with PS HO or GERAN with DTM HO support".
*Phase 1: Radio Access Technology transfer* starts when the UE engaged in a voice over IP session or Voice over Long Term Evolution, VoLTE session over EUTRAN (source EUTRAN) or a video that includes a voice/audio component over an established voice over IP bearer, moves out of the coverage area of EUTRAN and enters the coverage area of UTRAN/GERAN, a handover from EUTRAN to UTRAN/GERAN is required. The eNB in the source EUTRAN selects a target UTRAN/GERAN cell based on the neighbor list and the received UE measurement reports. The eNB then sends a Handoff required message to the MME and includes an SRVCC Handover, HO, indicator IE. The eNB sets the value of the SRVCC HO Indicator IE based on the target cell capability and the UE capability. In addition, the eNB indicates to the MME if the handover shall be prepared for
- Packet Switch, PS, and Circuit Switch, CS, domain if the target cell is a UTRAN or GERAN cell with Dual Transfer Mode, DTM, Handover, HO, support and the UE can handover the voice over IP bearer and any additional PS bearers established in the EUTRAN, or
- only for CS domain if the target cell is GERAN without DTM or with DTM but without DTM HO support or UTRAN cell without PS HO support.

Below, handover of PS and CS bearers (a) as specified in 3GPP 23.216 is described.

Based on the QCI associated with the voice over IP bearer (QCI=1) and the SRVCC HO indication, the MME splits the voice bearer from all other PS bearers and initiates their relocation towards the MSC Server and if towards the Serving General Packet Radio Service, GPRS, Support Node, SGSN, respectiveiy. The MME initiates the PS-CS handover procedure for the voice bearer by sending a SRVCC PS to CS Request message to the MSC Server where the message includes the target cell identifier and other relevant information required for preparing the handover. In parallel, for the PS bearers the MME initiates relocation of the PS bearers by sending a forward relocation request message to the target SGSN connected to the target UTRAN or GERAN.

The MSC server, which in this example acts as the target MSC for handover, requests resource allocation for the CS relocation of the voice bearer by sending the Relocation Request/Handover Request message to the target radio controller in target UTRAN/GERAN. Similarly, the target SGSN requests resource allocation for the PS bearers relocation by sending the Relocation Request/Handover Request message to the same target radio controller in the target UTRAN/GERAN. After the target radio controller receives the CS relocation/handover request with the PS relocation/handover request, it assigns the appropriate CS and PS resources and responds back to both the MSC server and the target SGSN. At this point, the target SGSN sends a Forward Relocation Response message to the MME.

The MSC server establishes the circuit connection at the Media gateway, MGW, in preparation to receive the voice call from the IMS. At this point, phase 2 of the SRVCC session transfer will commence.

*Phase* 2 of *the SRVCC: session transfer:* during session transfer, the access control and voice over IP media anchoring is moved from the Evolved Packet Core, EPC to the legacy circuit switched network but the IMS CSCF remains in control of the call.

The session transfer is initiated when the MSC Server sends the Session Transfer message towards the IMS, the message contains a Session Transfer Number for SRVCC, STN-SR. The Session transfer message triggers the downlink flow of the voice over IP packets to be switched towards the CS access leg and the source IMS access leg is released in accordance with 3GPP TS 23.237. The MSC Server then sends a SRVCC PS to CS Response message to the MME. The MME synchronizes the two prepared relocations (PS and CS bearer relocation) and sends a Handover Command message to the source eNB in EUTRAN.

Subsequently, the eNB sends a handover from EUTRAN command to the UE and the UE tunes to the target UTRAN/GERAN cell. Handover Detection at the target radio controller in target UTRAN/GERAN occurs, then the target radio controller in target UTRAN/GERAN sends Handover Detection message to the MSC server. At this stage, the MSC server can send/receive voice data. The UE sends a Handover Complete message via the target radio controller in target UTRAN/GERAN to the MSC server. At this stage, the UE re-establishes the connection with the CS network and the CS relocation/handover is complete. The target radio controller in target UTRAN/GERAN sends Relocation Complete/Handover Complete message to the MSC server. The speech circuit is through connected in the MSC Server/MGW in accordance with 3GPP TS 23.009. Finally, the MSC Server sends a SRVCC PS to CS Complete Notification message to the MME. The MME acknowledges the information by sending a SRVCC PS to CS Complete Acknowledge message to the MSC Server.

The MME proceeds by deactivating the voice over IP bearer towards SGW/PGW and sets the PS-to-CS handover indicator to Delete Bearer Command message sent to the SGW. This triggers MME-initiated Dedicated Bearer Deactivation procedure as specified in 3GPP TS 23.401.

In parallel to the previous step of CS relocation, the target radio controller in target UTRAN/GERAN sends Relocation Complete/Handover Complete message to target SGSN. The Target SGSN sends a Forward Relocation Complete message to the MME which acknowledges the information by sending a Forward Relocation Complete Acknowledge message to the target SGSN.

The Target SGSN updates the bearer with SGW/PGW GW as specified in 3GPP TS 23.401. The PGW acts as GGSN when the PS bearers are relocated to the target SGSN. The MME sends Delete Session Request to the SGW and a Release Resources message to the Source eNB also as defined in 3GPP TS 23.401. The Source eNB releases its resources related to the UE and responds back to the MME.

### Next Generation Core Network NGCN

3GPP is currently working on a specifying the Architecture for Next Generation System (3GPP TR 23.799 and 3GPP TS 23.501). The new core network architecture, also referred to as Next Generation Core network, or fifth generation Core Network, NGCN or 5G CN, can be based on an evolution of the current Evolved Packet Core network, EPC, or based on a "clean slate" approach. NGCN must support:
- the new radio access network, New RAN (also known as G-UTRAN or NextGen RAN or NG RAN), that supports the Evolved Long Term Evolution, eLTE eNBs and/or the new radio access network technology, NR (also known as G-UTRA) base stations, BS, also referred to as 5G NodeB, 5G NB, or gNB, and/or,
- other non-3GPP accesses.

Note that eLTE eNBs correspond to eNBs that support 3GPP release 15 LTE specifications (currently in progress). eLTE eNBs could connect to EPC and NGCN/5GCN. LTE eNBs, which could be referred to as legacy LTE eNBs are expected to only connect to EPC.

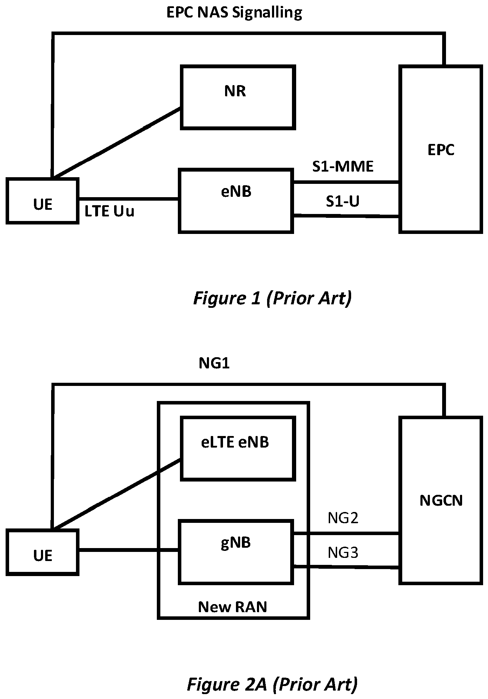

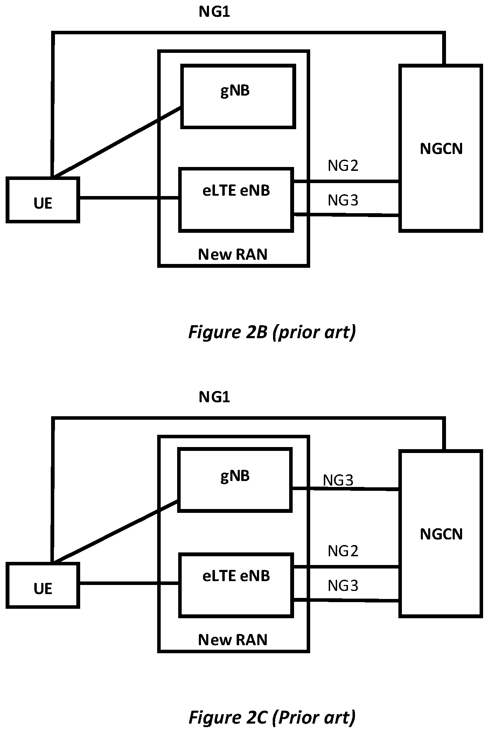

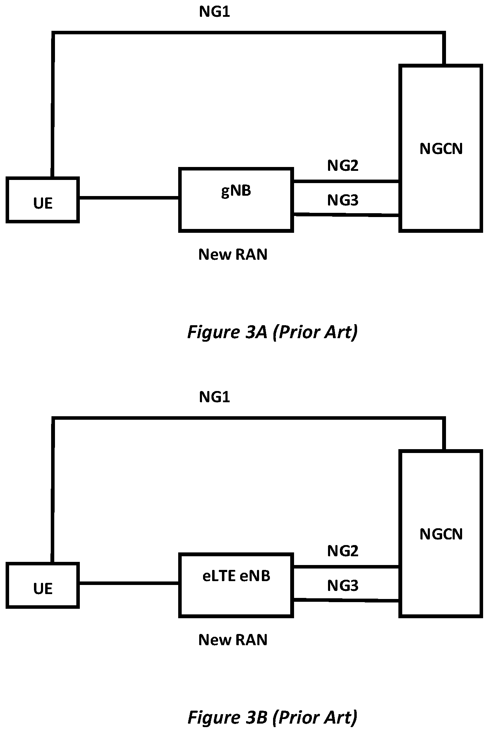

Example scenarios proposed in 3GPP for connecting NGCN to the New RAN are illustrated in Figures 1, 2A-2C and 3A-3B showing standalone and non-standalone configurations of gNB and eLTE eNB in the New RAN and interconnectivity with NGCN or EPC. Figure 1 illustrates a Non-standalone NR scenario where a gNB co-exists with an eLTE eNB in the New RAN and uses eLTE eNB to connect to the EPC. The New RAN is connected to an EPC from the eLTE eNB. Figure 1 allows the UE to reuse the NAS protocol based on 3GPP TS 24.301. Figure 1 corresponds to scenario 3 of 3GPP "5G Architecture Options-Full set" RP-161266. Figure 2A illustrates a Non-standalone eLTE scenario where a gNB co-exists with an eLTE eNB in the New RAN. The New RAN is connected to NGCN from the gNB and acts as an anchor to NGNC for the eLTE eNB. In Figure 2A, the UE would use a new NAS like protocol to the NGCN, which is referred to as NG1 interface. Figure 2A corresponds to scenario 4 of 3GPP "5G Architecture Options-Full set" RP-161266. Figure 28 illustrates another non-standalone NR scenario where a gNB co-exists with an eLTE eNB in the New RAN. The New RAN is connected to an NGCN from the eLTE eNB and acts as an anchor to NGCN for the gNB. In Figure 2B, the UE would use a new NAS like protocol to the NGCN, which is referred to as NG1 interface. Figure 2B corresponds to scenario 7 of 3GPP "5G Architecture Options-Full set" RP-161266, Figure 2C illustrates another non-standalone NR scenario where a gNB co-exists with an eLTE eNB and eLTE eNB sets as an anchor for control plane connectivity for gNB. Both the eLTE eNB and the gNB have a user plane interface with the NGCN. Figure 2C corresponds to scenario 7a of 3GPP "5G Architecture Options-Full set" RP-161266. Figure 3A illustrates a standalone scenario where only gNBs exist in the New RAN and gNB interfaces to the NGCN. Figure 3A corresponds to scenario 2 of 3GPP "5G Architecture Options-Full set" RP-161266. Finally, Figure 3B illustrates another standalone scenario where only eLTE eNBs exist in the New RAN and eLTE eNB interfaces to the NGCN. Figure 3B corresponds to scenario 5 of 3GPP "5G Architecture Options-Full set" RP-161266.

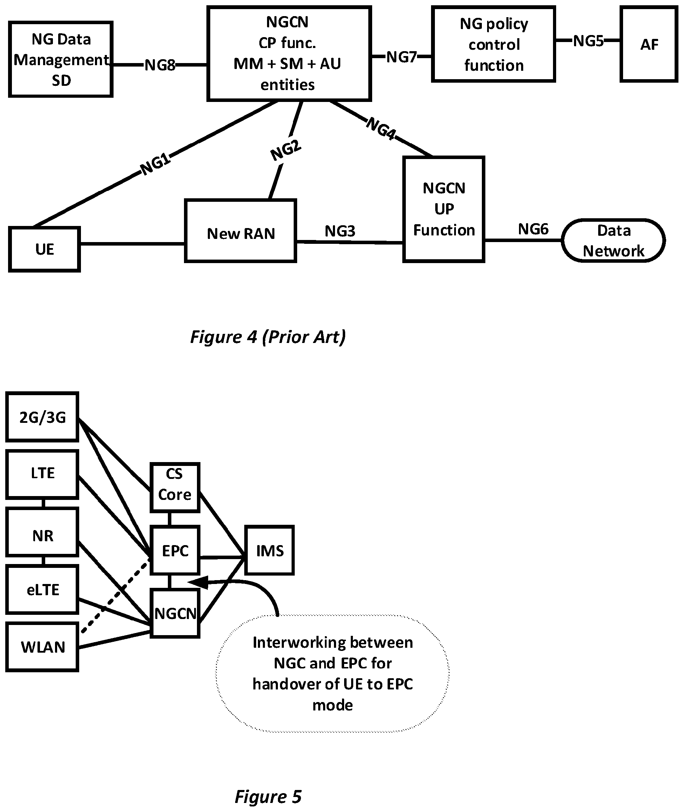

Figure 4 illustrates one example of an NGCN functional architecture currently in discussion in 3GPP. Other options are also described in 3GPP TR 23.799 or TS 23.501. Figure 4 is shown simply as an example functional architecture that encompasses key architectural principles that are described in 3GPP TR 23.799 and TS 23.501. Some of the key architectural principles include:
- Separation of control and user plane functions.
- GERAN and UTRAN accesses are not supported.
- Standalone Subscriber database, DB, for storing subscription profiles.
- Separated Mobility Management, MM, and Session Management, SM, control functions. In contrast to current EPC, where the MME handles both MM and SM control functions.
- Support for home-routed roaming architecture where the MM control function will be part of visiting PLMN while the SM control function will generally be within the home PLMN.
- Support for UE simultaneously accessing multiple network slice: In this case, the MM functionality should be part of common control function while the SM functionality should be part of slice specific control function.
- Access common Core network, CN, design: consist of defining unified authentication framework, NAS protocol which is common to all the accesses and a common (R)AN-NGCN interface to all the accesses. This CN support functionality is common to all the accesses. Thus, NG1, NG2 and NG3 interfaces of Figure 4 should be common to the 3GPP (NR, eLTE) as well as non-3GPP accesses (e.g., WiFi) are used.
- Single termination point for NG1 interface (See Figure 4) in the NGCN, for a given access: This also allows a single security association between the UE and the NGCN for a given access.
- Standalone Authentication function, AU: For supporting unified authentication framework and for supporting UEs which may support only subset of 5G functionality (e.g. not supporting MM functionality). The Authentication function should be separate from the MM function.
- Standalone Application Function, AF: The Application Function could belong to 3rd party and hence part of different administrative domain compared to NGCN. Hence it should be defined as standalone Network Function, NF.

Patent application WO2013/048189 A1 discloses a method for supporting voice service continuity. The method includes a UE sending information of whether supporting a capability of SRVCC to UTRAN and/or information of whether supporting a capability of SRVCC to GERAN to an MME, and the MME correctly setting an instruction of whether supporting provision of IMS voice in PS domain according to the information sent by the UE.

Patent application WO2016/076591 A1 relates to method and apparatus for handling a Single Radio Voice Call Continuity (SRVCC) handover. The method is implemented in a network node of a wireless communication system and includes determining whether a voice session between a user equipment (UE) and an IP multimedia subsystem (IMS) is initiated by a program regarding web real time communication (web RTC) of the UE, transmitting, to a serving eNB, information indicating whether a single radio voice call continuity (SRVCC) handover is applicable to the voice session based on whether the voice session is initiated by the program regarding web RTC of the UE.

Non-patent disclosure "New RAN Roll Out Scenarios" by Ericsson, 3GPP draft; R3-161895, vol. RAN WG3, 21 August 2016, is directed to migrating towards a Next Generation System from a RAN perspective and consequences in terms of supported protocol functions. A couple of possible roll-out scenarios are provided.

### Summary

The invention is provided in the appended set of claims.

### Acronyms and definitions:

The following acronyms and definitions are used throughout this disclosure.

| | | |
|---|---|---|
| • | 3GPP | Third Generation Partnership Project |
| • | 5G | Fifth Generation |
| • | 4G | Fourth Generation |
| • | 3G | Third Generation |
| • | 2G | Second Generation |
| • | 5GCN | 5G Core Network |
| • | BS | Base station |
| • | CDMA | Code Division Multiplex Access |
| • | CPU | Central Processing Unit |
| • | CS | Circuit Switched |
| • | eLTE | Evolved LTE |
| • | eNB | Enhanced or Evolved Node B |
| • | EPC | Evolved Packet Core |
| • | EUTRAN | Evolved Universal Terrestrial Radio Access Network |
| • | FPGA | Field Programmable Gate Array |
| • | GERAN | Global Evolution, GSM/EDGE, Radio Access Network |
| • | gNB | next generation NodeB |
| • | HO | Handover |
| • | IMS | IP multimedia subsystem |
| • | LTE | Long Term Evolution |
| • | MM | Mobility Management |
| • | MME | Mobility Management Entity |
| • | MSC | Mobile Switching Centre |
| • | NF | Network Function |
| • | NG | Next Generation |
| • | NR | New Radio |
| • | NGCN | Next Generation Core network |
| • | PCC | Policy Control and Charging |
| • | PGW | Packet Data gateway |
| • | PS | Packet Switched |
| • | RAN | Radio Access Network |
| • | RAT | Radio Access Technology |
| • | RRC | Radio Resource Control |
| • | SGSN | Serving General Packet Radio Service Support Node |
| • | SGW | Serving Gateway |
| • | SD | Subscriber Database |
| • | SM | Session Management |
| • | SRVCC | Single Radio Voice Call Continuity |
| • | UE | User Equipment |
| • | UP | User Plane |
| • | USB | Universal Serial Bus |
| • | WD | Wireless Device |

**EPC Mode:** EPC Mode refers to an ability to connect and communicate with an EPC network, The UE is in EPC mode when it connects to and communicates with EPC network using NAS protocol in accordance with 3GPP TS 24.301. A radio access node operating in EPC mode supports connectivity to EPC network using S1-U and S1-MME interfaces. Example of radio access node that operate in EPC mode include eNB and may include eLTE eNB, or may include future versions of LTE.

**SRVCC in EPC mode:** refers to a handover capability from the NGCN/New RAN that does not support voice call continuity to CS network, to an SRVCC capable radio access node (e.g., eNB) and core network (e.g., EPC) capable of providing voice call continuity to UTRAN, GERAN or CDMA and a CS network (or SRVCC to another Packet Switched network). SRVCC in EPC mode is sometimes referred to as SRVCC from EUTRAN in this document Both terms are used interchangeably.

**SRVCC from EUTRAN:** see SRVCC in EPC mode.

***Evolved LTE, eLTE, eNB*:** The eLTE eNB is the evolution of eNB that supports at least 3GPP release 15 LTE radio access technology standard and supports connectivity to EPC or NGCN. The eLTE eNB may support SRVCC to UTRAN/GERAN when operating in EPC mode, i.e., connected to an SRVCC capable EPC.

New Radio, NR **BS:**
referred to as gNB in this disclosure, also referred to as 5G Base Station. The gNB supports new radio access technology currently being described in 3GPP release 15. It supports connectivity to the NGCN and does not support SRVCC to/from UTRAN, GERAN or CDMA. The gNB can support handover to neighboring LTE eNB or eLTE eNB.

### Next Generation Radio Access Network, New RAN

New RAN (also known as 5G or NextGen RAN or NG RAN or G-UTRAN) is a radio access network that supports one or more of the following options:
1) Standalone New Radio, or gNB, or 5G BS (scenario 2, Figure 3A)
2) Non-Standalone eLTE: New Radio/gNB is the anchor with eLTE extensions (scenario 4, Figure 2A)
3) standalone eLTE eNB (scenario 5, Figure 3B)
4) Non-Standalone NR: eLTE eNB is the anchor with New Radio extensions (scenario 7, Figure 2B).
with the common characteristics that the New RAN interfaces with the NGCN.

### Non-standalone NR:

A deployment configuration where the gNB requires an LTE eNB as anchor for control plane connectivity to EPC (Figure 1), or an eLTE eNB as anchor for control plane connectivity to NGC (Figure 2B).

**Non-standalone Evolved E-UTRA:** A deployment configuration where the eLTE eNB requires a gNB as anchor for control plane connectivity to NGC (Figure 2A).

According to the present disclosure, methods and apparatuses as defined in the appended claims are provided. Although Figure 1 (Prior art) is considered as a possible architectural scenario, the embodiments in this document are based on the architecture options shown in Figures 2A-2C and 3A-3B where a new core network referred to henceforth in this disclosure as NGCN is used to support NR, eLTE and/or other non-3GPP accesses. In this disclosure, the UE is assumed to attach to the NGCN using a logical N1 interface via a radio access node that is connected to the NGCN using the N2 interface. UE does not support interworking with legacy CS network for SRVCC. The Radio access node may be the NR BS/gNB that does not support SRVCC to CS UTRAN and GERAN but can support handover to EUTRAN. The Radio access node may also be an eLTE eNB and may operate in EPC mode, i.e., can connect to EPC network, in which case it may itself support SRVCC to UTRAN and GERAN. In this disclosure, the UE also referred to as a wireless device will initially attach to a radio access node connected to the NGCN, where the NGCN does not support interworking with CS network for SRVCC.

One of the 3GPP architectural principles of the NGCN is it should not support GERAN and UTRAN, i.e., 2G and 3G access technologies, nor should it support interworking with legacy networks (e.g., GPRS or circuit switched, CS, networks).

According to current assumptions made by Group Special Mobile Association, GSMA and 3GPP, support of IMS Voice over IP service in 5G over NR and eLTE should be provided through NGCN. In addition, operators seem to indicate a preference that NGCN and gNB should not support SRVCC with the associated interworking requirements with CS networks as currently specified for EUTRAN and EPC in 3GPP TS 23.216.

In order to fulfill this requirement, ubiquitous Voice over IP coverage with LTE, eLTE and NR is required and the UTRAN/GERAN coverage and CS legacy voice is assumed no longer existent or provided. However, this ultimate goal may not be possible to achieve for all operators for a very long time. Many difficulties are foreseen including but not limited to:
- spectrum availability for 4G and 5G,
- Prohibitive cost of the spectrum when available, making it impossible for all operators to move to 5G,
- Small operators and MVNOs may use legacy networks for a very long time.
- Possibility to repurpose 2G/3G spectrum for 4G/5G use would require careful planning which may be costly and problematic if not properly planned.

In any case, legacy CS networks supporting UTRAN, GSM and CDMA access technologies would likely co-exist with EPC network that supports EUTRAN and with NGCN that supports NR and evolved EUTRAN and this for many years to come. Voice services would be provided to all wireless users in the world via either legacy CS network as CS voice and/or via PS network as voice over IP service. This co-existence is deemed unavoidable at least in initial deployment of 5G.

Given the above, a solution is therefore missing in NGCN and new RAN to enable voice service continuity without adding the CS interworking functionality in NGCN or additional functionality in gNB to support SRVCC handover to UTRAN/GERAN/CDMA. In this disclosure, wireless device and UE are interchangeable.

In embodiments presented herein, it is assumed that the NR (or 5G) cells may have LTE neighbor cells or eLTE neighbor cells.

LTE neighbor cells are served by eNBs that support SRVCC to EUTRAN/GERAN and that are connected to an EPC that can interwork with CS network over Sv interface, referred herein as operation in EPC mode,

Similarly, eLTE neighbor cells are served by eLTE eNBs that may or may not support SRVCC to EUTRAN/GERAN and that are connected to either EPC or NGCN. The eLTE eNB which does not support SRVCC to UTRAN/GERAN and is connected to NGCN would exercise the embodiments herein. The eLTE eNB which does not support SRVCC to UTRAN/GERAN and is connected to an EPC would however support handover to an eNB that supports SRVCC.

In one aspect, a gNB or an eLTE eNB connecting a UE to the NGCN orders a UE to move/handover to an eNB in EUTRAN connecting the UE to an SRVCC capable EPC in order to perform an eventual SRVCC from EPC to UTRAN/GERAN of a voice over IP call. In one aspect, the handover decision is based on receiving
▪ an indication that the UE is subject to SRVCC from EUTRAN (i.e., LTE with EPC) and/or
▪ an indication that UE supports SRVCC from EUTRAN (i.e., LTE with EPC) and/or
▪ an indication that UE is engaged in a VoLTE session (e.g., based on QoS info)

In one aspect, following the handover of the UE from NR/eLTE eNB and NGCN to eNB and EPC, the user plane remains anchored in NGCN.

An embodiment is provided for a method in a wireless device or User Equipment device (UE) for sending an SRVCC in EPC mode indicator to a radio access node operating in next gen wireless access network (gNB or eLTE eNB, or other) indicating support of SRVCC from EUTRAN and be instructed as a result to move to a cell connected to EPC that will provide the service. The method comprises sending a message via a radio access node (gNB or eLTE eNB) to a control plane entity in NGCN, the message indicating the wireless device supports SRVCC in EPC mode. When receiving instruction to connect to a neighboring radio access node that supports connectivity to an EPC network, the UE proceeds with connecting to the EPC via the neighboring radio access node.

Other embodiments are provided to describe a method in a gNB for making a decision to handover a UE to an eNB. The method may also be executed in an eLTE eNB if it is connected to NGCN, where the eLTE eNB does not support SRVCC to UTRAN/GERAN. The method comprises the steps of receiving information indicating that SRVCC in EPC, mode is supported for a wireless device connected to the NGCN. Based on the received indication, the gNB executes the step of determining, using configured parameters including the received indication, whether handover of the wireless device to a neighboring radio access node, that supports SRVCC operating in EPC mode, is required. If gNB determines handover is required, the embodiment further comprises the step of initiating handover of the wireless device to the neighboring radio access node operating in EPC mode (i.e., radio access node that connects to an SRVCC capable EPC that supports the Sv interface.).

An aspect is provided where the gNB receives from the wireless device the SRVCC capabilities towards GERAN and/or UTRAN and/or CDMA. Although gNB does not support SRVCC to those legacy access networks, it may use the information in accordance with radio coverage information to determine if a handover for SRVCC in EPC mode is required.

Another aspect is provided where the gNB may also receive from the NGCN information indicating
- the wireless device is subject to SRVCC from EUTRAN or
- the wireless device is subject to SRVCC in EPC mode or
- voice call continuity is enabled for the wireless device.

This information may be used by the gNB to trigger a handover to a neighboring radio access node (e.g., EUTRAN) that is SRVCC capable (compatible to the SRVCC capabilities of the UE, if any were received). The neighboring radio access node must also support connectivity to an SRVCC capable EPC as specified in 3GPP TS 23 216 to perform voice call continuity for the wireless device.

Embodiments are provided where the gNB initiates the handover:
1. Immediately following the registration/attach procedure of the UE and establishment of the user plane connection through the NGCN and reception of the SRVCC in EPC mode indicator from the UE, or
2. upon receiving the SRVCC indicators from NGCN comprising indicator for support of SRVCC from EUTRAN by the UE and indicator that UE subject to SRVCC from EUTRAN or voice call continuity enabled.

If gNB or eLTE eNB determines based on the extent of radio coverage that handover to EUTRAN for SRVCC is not required, it may not initiate handover for SRVCC regardless of the indicators above.

An embodiment of a method in a control plane network entity such as Mobility Management, MM, entity that performs mobility management and/or session management in NGCN, is provided for enabling the handover to EUTRAN or more generally to an SRVCC capable radio access node that supports SRVCC and connectivity to an SRVCC capable EPC. The method comprises the MM entity receiving from a wireless device via a radio access node (e.g., gNB) a message indicating the wireless device supports SRVCC in EPC mode. The message may be an attach message, or other appropriate NG1 (or NAS) message. The MM entity executes the step of sending a radio access network message to the radio access node (e.g. gNB) indicating support of SRVCC in EPC mode in the NGCN and in the wireless device. If the user plane anchor is already allocated for the wireless device, then upon receiving a handoff request (or relocating message) indicating handover of the wireless device for SRVCC in EPC mode, the network entity will be determining if the user plane anchor allocated to the wireless device should be relocated to a corresponding anchor in the EPC network. Once, the determining step is performed, the MM entity performs sending a handoff command to the corresponding EPC network indicating that handover of the wireless device is initiated and indicating whether the user plane anchor relocation is required. If the user plane has not been allocated, i.e., the gNB has determined to move the wireless device after the attach procedure, then the MM entity will receive an indication to release any associated wireless device context.

In an embodiment, the MM entity in the NGCN may determine that the wireless device is subject to SRVCC from EUTRAN or SRVCC in EPC mode if it has received
- an indication that UE is attached for IMS, or
- has received an indication from subscription database or policy sewer that the wireless device is either registered to receive voice services or that the wireless device requires voice service continuity or
- may have received an indication from the policy server that the wireless device is currently establishing a voice session.

Since the MM entity does not support interworking with CS network, it informs the gNB that the wireless device currently connected to, is subject or requires SRVCC in EPC mode. This would allow the gNB to determine if the UE should be moved immediately to a neighboring radio access node (e.g. EUTRAN) that supports SRVCC and which is connected to an SRVCC capable EPC.

In one aspect, the MM entity via the SM entity determines if the user plane, UP, anchor, relocation to a PGW in EPC is required for SRVCC or if the UP anchor should be maintained in the NGCN following handover for SRVCC.

Embodiments of a wireless device are also disclosed. In some embodiments, a wireless device is adapted to send a message via the radio access node such a gNB to a control plane entity in the first core network such as a 5^{th} Generation Core Network, 5GCN, or NGCN, where the message indicates the wireless device supports SRVCC from a second core network, such as EPC to a third core network such as a Circuit switched Core network. The wireless device is adapted to receive instruction from the NGCN to connect to a neighboring radio access node (e.g., EUTRAN eNB) that is capable to connect to the EPC and connect to the EPC via that neighboring radio access node.

In some embodiments, a wireless device comprises at least one transceiver, at least one processor; and a memory comprising instructions executable by the at least one processor whereby the wireless device is operable to send a message via the radio access node such a gNB to a control plane entity in the first core network such as a 5GCN, or NGCN, where the message indicates the wireless device supports SRVCC from a second core network, such as EPC to a third core network such as a Circuit switched Core network. The wireless device is adapted to receive instruction from the NGCN to connect to a neighboring radio access node (e.g., EUTRAN eNB) that is capable to connect to the EPC and therefore connect to the EPC via that neighboring radio access node.

In some embodiments, a wireless device comprises a transmitting module, a connection module and a receiver module. The transmitting module is operable to send a message via the transmitting module to a control plane entity in the first core network such as 5GCN, or NGCN and over the radio access node such a gNB. The message indicates the wireless device supports SRVCC from a second core network, such as EPC to a third core network such as a Circuit switched Core network. The receiving module is operable to receive an instruction from the NGCN to connect to a neighboring radio access node (e.g., EUTRAN eNB) that is capable to connect to the EPC. The connecting module operable to connect to the EPC via that neighboring radio access node.

In some embodiments, a radio network node in the 5GCN is disclosed to perform any of the methods described herein.

In some embodiment, a control plane entity of the 5GCN is disclosed to perform any of the methods described herein.

### Brief Description of the Drawings

The accompanying drawing figures incorporated in and forming a part of this specification illustrate several aspects of the disclosure, and together with the description serve to explain the principles of the disclosure.
Figure 1 (Prior art) illustrates a Non-standalone NR scenario where a gNB co-exists with an eLTE eNB in the New RAN and uses eLTE eNB to conned to the EPC.
Figure 2A (Prior art) illustrates another Non-standalone eLTE scenario where a gNB co-exists with an eLTE eNB in the New RAN.
Figure 2B (Prior art) illustrates another non-standalone NR scenario where a gNB co-exists with an eLTE eNB in the New RAN.
Figure 2C (Prior art) illustrates another non-standalone NR scenario where a gNB co-exists with an eLTE eNB and eLTE eNB acts as an anchor for control plane connectivity for gNB.
Figure 3A (Prior art) illustrates a standalone scenario where only gNBs exist in the New RAN and gNB interfaces to the NGCN.
Figure 3B (Prior art) illustrates another standalone scenario where only eLTE eNBs exist in the New RAN and eLTE eNB interfaces to the NGCN.
Figure 4 (prior art) illustrates one example of an NGCN functional architecture currently in discussion in 3GPP.
Figure 5 illustrates an example of legacy core network co-existence with EPC and NGCN according to one embodiment.
Figure 6 illustrates a legacy core networks co-existence with EPC and NGCN to support SRVCC according to another embodiment.
Figure 7 illustrates a signaling flow for support of SRVCC from gNB and NGCN to EUTRAN and EPC according to one embodiment.
Figure 8 illustrates anchoring of user plane in NGCN following SRVCC handover according to one embodiment.
Figure 9A illustrates an exemplary method executed on a wireless device/UEin accordance with an embodiment.
Figure 9B illustrates an exemplary method executed on a gNB for determining if a handover to EUTRAN for SRVCC is required in accordance with some embodiment.
Figure 10 illustrates an exemplary method on a control plane function in NGCN for supporting handover for SRVCC from New RAN/NGCN to EUTRAN/EPC in accordance with some embodiments.
Figure 11 illustrates a circuitry of a user equipment or wireless device according to one embodiment.
Figure 12 illustrates a wireless device or user equipment according to other embodiments.
Figure 13 illustrates an exemplary embodiment of a gNB according to some embodiments of the present disclosure.
Figure 14 illustrates an exemplary embodiment of a virtualized gNB according to some embodiments of the present disclosure.

### Detailed Description

The embodiments set forth below represent information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure.

A UE herein, is a non-limiting term refers to any type of wireless device communicating over a wireless radio interface with a radio access node such as eLTE eNB, LTE eNB, 5G/NR gNB, WiFi Access point, AP, and connecting to core network nodes over a network interface (e.g., non-access stratum, NAS, or other signaling protocol). Example of network nodes include MME if EPC network, MM entity and SM entity in NGCN. UE also communicate with other network nodes such as Access Network Discovery and selection function, ANDSF, Proxy Call and Session Control function, PCSCF in IP Multimedia Subsystem, IMS, etc. The UE may also communicate with other UEs in a cellular or mobile communication system. Examples of a UE are a Personal Digital Assistant (PDA), a tablet, mobile terminals, a smart phone. Laptop Embedded Equipment (LEE), Laptop Mounted Equipment (LME), Universal Serial Bus (USB) dongles, etc.

In certain embodiments, radio access nodes may communicate with each other, e.g. via an interface (e.g. X2 in LTE or similar interface). The radio access nodes (e.g., LTE eNB, eLTE eNB, gNB) are also capable of communicating with control plane network entities (e.g., MME, MM entity, SM entity, etc.) via control plane interfaces (e.g., S1-AP/MME, NG2). The radio access nodes are additionally communicating with user plane network entities (e.g., service gateway, SGW, NGCN user plane, UP, functions, etc.) over the respective user plane interfaces (e.g., S1-U. NG3). The radio access nodes supporting different access technologies may be collocated in the same physical node. For example, a base station may support LTE and NR or eLTE and NR or LTE and eLTE. When in collocated mode, the handover from NR to EUTRA may be handled as an intra-node handover to optimize some signaling,

In this disclosure, Voice over IP session refers to either VoIP or Voice over LTE, VoLTE, or Voice over NR, all interchangeable in this disclosure. The VoIP session is established with or without Internet Protocol Multimedia subsystem, IMS. However, the embodiments herein are described for VoIP sessions established with IMS. The VoIP session includes a voice/audio component and may also include a video component.

The following embodiments are described using gNB as the radio access node.

However, it will be understood that the embodiments herein also apply when using an eLTE eNB that does not support SRVCC to UTRAN/GERAN and is connected to NGCN and when using an eLTE eNB that supports SRVCC to UTRAN/GERAN and the eLTE eNB is connected to NGCN. The embodiments enable a UE to change from NGCN to EPC when an SRVCC scenario is possible, however the target cell may be the same as the source cell.

Embodiments are now provided to describe a scenario involving a UE connected to a gNB and moved to an eNB in EUTRAN where a potential SRVCC could be provided when required.

Figure 5 illustrates an example of legacy CS core network co-existence with the EPC where the EPC interworks with the NGCN to support SRVCC. NGCN does not interface nor interwork with CS Core network. Figure 5 shows the GERAN/UTRAN connected to the CS core network and to an EPC. The CS core network interworks with the EPC, more specifically with the MME in the EPC via the Sv interface as specified in 3GPP TS 23.216. The EPC supports UTRAN/GERAN (PS component), EUTRAN (LTE eNBs) and non-3GPP access such as WiFi. The EPC in this disclosure is upgraded to interwork with the NGCN MM entity and/or SM entity for supporting handover of a UE that wants to operate in EPC mode due to potential SRVCC. The NGCN interfaces to gNB over control plane interface. NG2 and user plane interface, NG3. The NGCN also supports WiFi access and other non-3GPP accesses.

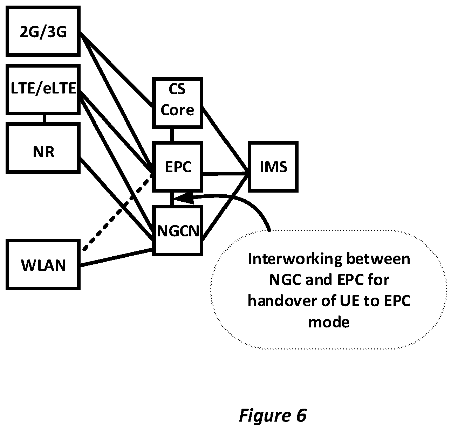

Figure 6 is another variant of Figure 5, where the CS network supports CS UTRAN and GERAN and interworks with an upgraded EPC. The upgraded EPC supports UTRAN/GERAN (PS component), EUTRAN (LTE eNBs) as well as Evolved EUTRAN (eLTE eNBs) and non-3GPP access such as WiFi. The EPC is also upgraded to interwork with the NGCN to allow handover of a UE for operating in EPC mode. Similar to Figure 5, the NGCN interfaces and supports Evolved EUTRAN (eLTE eNBs), NR (gNB) and WiFi access (other non-3GPP accesses may also be supported). NGCN in Figure 6 also supports interworking with the upgraded EPC. Note that if the UE was initially connected to an eLTE eNB that is connected to both the upgraded EPC and to an NGCN such as the configuration shown in Figure 6, then the following alternative scenarios are possible:
1. The UE is attached to the NGCN via the eLTE eNB. The eLTE eNB receives an indication from NGCN that the UE is subject to SRVCC from EUTRAN. Since the eLTE eNB is also connected to EPC it simply initiates a handover/reconnection of the UE from NGCN to EPC. After core network relocation from NGCN to EPC, and if the eLTE eNB supports SRVCC to UTRAN/GERAN then when the UE establishes a VoIP session, the UE may the be subject to SRVCC from the eLTE eNB to UTRAN/GERAN as specified in 3GPP TS 23.216.
2. Alternatively, when the UE connects to eLTE eNB that supports SRVCC and the UE indicates support for SRVCC from EUTRAN, the eLTE eNB may instead select to connect to an MME in EPC instead of selecting the NGCN at the time of the attach, in which case the UE and the network are ready for SRVCC handover when required as per 3GPP TS 23.216.

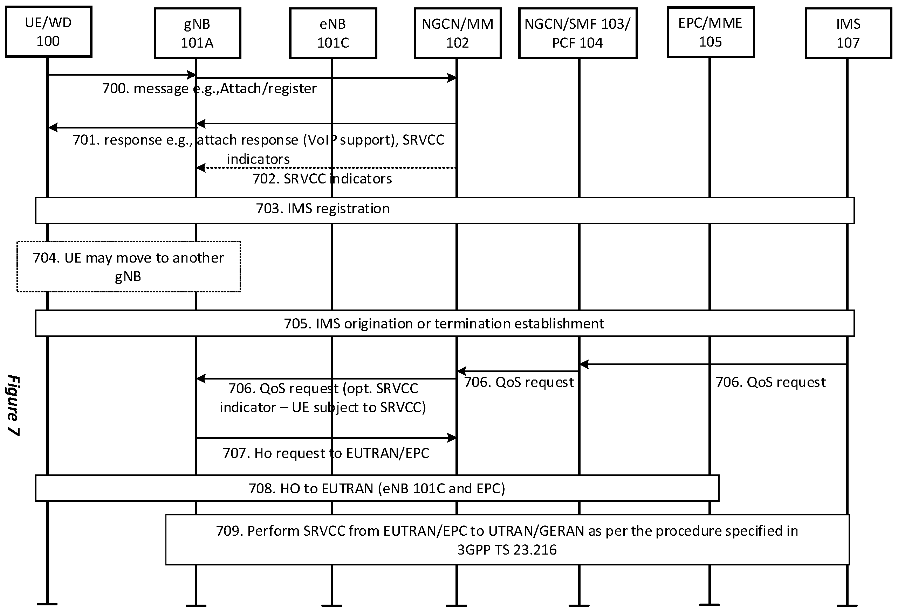

Figure 7 illustrates a signaling flow for support of SRVCC from gNB 101A and NGCN to EUTRAN eNB 101C and EPC according to one embodiment. In this embodiment the gNB 101A is connected to the NGCN as shown in the configuration of Figure 5. In the embodiment of Figure 7, the gNB 101A triggers the handover to eNB 101C only after the UE 100 has established a VoLTE session and the connection for the voice media packets is established over the gNB 101A and the User Plane, UP, function in NGCN.

Note that the handover initiated by the gNB 101A is different from the well-known SRVCC handover from EUTRAN to CS UTRAN/GERAN which is triggered by UE measurement reports and/or the UE losing coverage of LTE as described in 3GPP TS 23.216. The handover from gNB 101A/NGCN to EUTRAN/EPC is triggered by an indication that the UE is subject to SRVCC and/or support SRVCC from 4G/EUTRAN to UTRAN/GERAN and the establishment of the VoLTE connection. The new RAN (gNB) to EUTRAN handover described in these embodiments is executed in advance of the actual SRVCC handover from EUTRAN to CS UTRAN/GERAN.

Figure 7 illustrates an MM entity 102 and an SM entity 103 of the NGCN. The MM entity 101 is described in 3GPP TR 23.799 and 3GPP TS 23.501 as a functional entity that may support MM functions comprises:
- termination of New RAN control plane interface, NG2,
- termination of NAS or similar interface, NG1,
- NAS ciphering and integrity protection,
- Mobility Management (tracking of UE location),
- establishment and maintenance of the MM context for a UE 100 attaching to the NGCN,
- lawful intercept, LI, (for MM events and interface to LI System).
- transparent proxy for routing access authentication and SM messages or interacts with SM entity 103 to validate the establishment of a SM context for a UE 100 that has securely established an MM context.

The Session Management entity 103 is currently described in 3GPP TR 23.799 and 3GPP TS 23.501 as a functional entity responsible for SM functions that may comprise:
- UE IP address allocation & management (incl optional Authorization).
- selection and control of User Plane, UP, function,
- establishing, and managing packet data Sessions on-demand for the UE 100,
- termination of interfaces towards Policy control and Charging functions,
- Policy & Charging rules handling, including control part of enforcement and quality of service, QoS,
- Lawful intercept (for SM events and interface to LI System)

The NGCN UP function is currently described in 3GPP TR 23.799 and 3GPP TS 23.501 as a functional entity responsible for UP functions that may comprise the following functionality:
- Anchor point for Intra-/Inter-RAT mobility (when applicable),
- Packet routing & forwarding,
- QoS handling for User plane,
- Packet inspection and Policy rule enforcement,
- Lawful intercept (UP collection),
- Traffic accounting and reporting.

Step 700 of Figure 7: The UE 100 establishes a radio connection with a gNB 101A for the purpose of attaching to the NGCN. The UE 100 may indicate to the gNB 101A that it supports SRVCC from EUTRAN to UTRAN/GERAN/CDMA and may also include the supported frequencies and the IRAT-ParametersUTRA specified in 3GPP TS 36.331 to indicate the type of actual SRVCC capabilities supported by the UE 100. The connection request also includes an attach or a registration request for the NGCN (but may also be sent separately) which when received by the gNB 101A, is forwarded towards the NGCN to a selected MM entity 102. The UE 100 includes in the registration request message an indication that it supports SRVCC from EUTRAN. The SRVCC from EUTRAN indication may alternatively be sent from the UE 100 to the MM entity 102 in other NAS messages during the attach/registration procedure.

Step 701: VoLTE support in NGCN is not mandatory by default. However, if NGCN supports Voice over IP service, the MM entity 102 in its response to the UE 100 indicates voice support capability. Note that if VoLTE support is mandatory by default in NGCN, then voice support indication is not required to be sent to the UE 100 as support for voice over IP service is implicitly assumed when the UE 100 is attached to the NGCN.

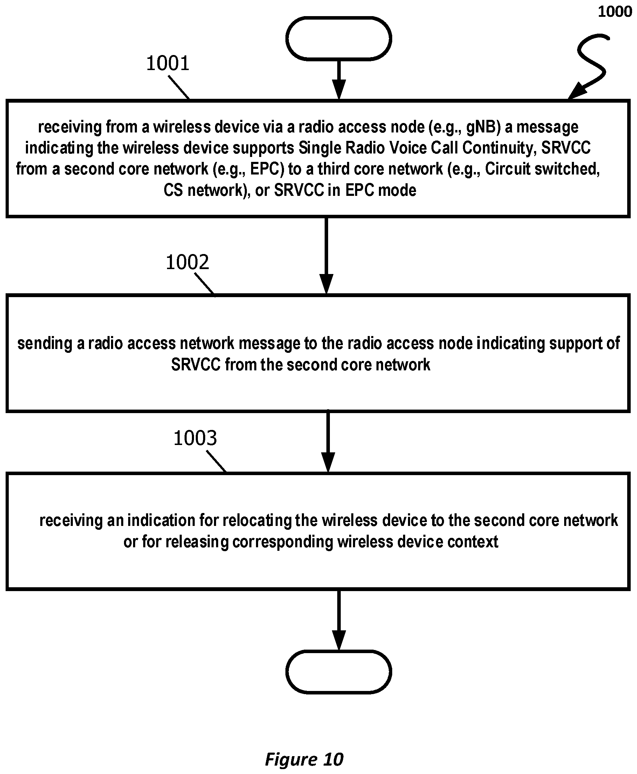

At step 702 (which may happen as part of step 701), the MM entity 102 may signal to the gNB 101A "support of SRVCC in EPC mode (aka. SRVCC from EUTRAN)" or similar indication. This indication is used to indicate that the UE and the NGCN support handover to EUTRAN for the purpose of enabling SRVCC handover from EUTRAN to CS UTRAN/GERAN. The gNB 101A may also receive a separate indication that indicates that the UE is subject to SRVCC from EUTRAN (see method in MM entity and Figure 10 for more details). The gNB 101A stores the received indications. Note that the indicator "UE subject to SRVCC" may be received later, when the UE establishes a packet data connection, registers with IMS, or establishes a VoIP session.

At step 703, the UE 100 registers via the NGCN in the IMS 107 for voice service and/or other IMS services.

At step 704, If the UE moves to a new gNB, the "support of SRVCC in EPC mode is provided to the new gNB over either a direct inter-gNB interface or from the NGCN during context transfer or handover procedure from source gNB 101A to the new gNB. The embodiment of Figure 7 assumes that handover from source gNB 101A to a new gNB is not required.

At steps 705, the UE originates or receives a VoLTE call with IMS 107.

At step 706, through interaction between the application function, AF in IMS 107 (e.g., PCSCF) and policy server function 104 or SM 103 entities in NGCN, a QoS request for voice media is send from NGCN to gNB 101A. The QoS request may include information indicating that the UE is subject to SRVCC from EUTRAN. The gNB 101A receives the indication that the UE is subject to SRVCC from EUTRAN at this step even if has been included in the earlier attach procedure ( step 702 above).

At step 707, the gNB 101A determines based on received and stored SRVCC indicators in previous steps, and stored policy data if the UE should be handed over to EUTRAN or to EPC mode to allow the UE 100 to connect to EPC through a neighbour eNB 101C that can connect to EPC. The handover is therefore triggered by establishment of the VoLTE session established and/or the indication that UE may be subject to SRVCC.

If gNB 101A determines that handover to an LTE eNB and EPC is required to enable the UE to connect to an SRVCC capable EPC, the gNB 101A connected to NGCN at step 707 sends a handover request to initiate handover to an eNB 101C capable of connecting to an SRVCC capable EPC network. Alternatively, the gNB 101A may also keep the call on NR (gNB 101A) if the radio conditions/coverage do not require performing an SRVCC for the VoLTE call. However, if the radio conditions are changing, then the handover to LTE and EPC is initiated. The handoff request may also indicate if user plane, UP, relocation is required, else the MM entity 102 makes such determination based on the NGCN network policy.

Several different methods for initiating handover can be used. E.g. handover request from gNB 101A to eNB 101C via an X2 interface or similar interface, or a handover request from gNB 101A to the MM entity 102 or SM entity 103 in NGCN, or gNB 101A sending a release with re-direct to the UE 100 requesting the UE 100 to connect to EUTRAN target cell due to potential SRVCC. Figure 7 illustrates the scenario where the gNB 101A sends the handoff request to MM entity 102 (or SM entity 103) in NGCN.

Step 708*: handoff execution*: The MM entity 102 receives the handoff request message or similar and determines if UP anchor relocation from NGCN to EPC is required (see below *1*. *Description of UP anchor relocation determination at handover for SRVCC from New RAN and NGCN to EUTRAN and EPC*). The MM entity 102 sends a handoff command towards the target LTE eNB (target EUTRAN) via interworking with MME 105 in EPC indicating if UP anchor relocation is required or not. The MM entity 102 indicates in the handoff command the required EPS bearer(s) to setup (including the VoLTE QoS parameters). The MM entity 102 may also indicate that the voice call may be subject to SRVCC handover to CS network. The MME 105 forwards the handoff command to the target eNB 101C. The handover to eNB 101C in EUTRAN is performed. This scenario shows the UP anchor is maintained in NGCN (no relocation performed). The UP connection for the VoLTE session is thus established between the UE 100, eNB 101C and the UP function in NGCN bypassing the SGW and PGW of the EPC and remains as an anchor for the IMS VoLTE/VoIP media session toward the IMS. The UP anchor could remain in NGCN even after the actual SRVCC is performed from EUTRAN to CS EUTRAN/GERAN.

Step 709: After the handover of the voice media connection of the VoLTE session is performed, the eNB 101C monitors and determines if SRVCC is required based on UE measurement report and other criteria and information as specified in 3GPP TS 23.216. The eNB 101C initiates SRVCC to UTRAN and/or GERAN if required as already standardized in 3GPP, with the difference that the UP anchor remains in NGCN.

### 1. Description of UP anchor relocation at handover for SRVCC from New RAN and NGCN to EUTRAN and EPC:

When the UE 100 is attached to NGCN via gNB 101A and is assigned an IP address, the UP function in NGCN provides UP anchor capability for the UE 100. When the IMS VoLTE/VoIP session is established over NGCN and gNB 101A, the UP anchor function in NGCN transmits all SIP signaling and media packets received from the UE 100 to the IMS. Similarly, the UP anchor function receives and transmits to the UE 100 all SIP signaling and media packets received from the IMS for the UE 100, When the MM entity 102 receives a handoff request indicating SRVCC in EPC mode from gNB 101A, The MM entity 102 queries the SM entity 103 to determine if UP anchor relocation to EPC is required. The SM entity 103 may determine based on configured operator policy or policy obtained from the policy server if UP anchor relocation is required for the VoLTE/VolP service at handover of the UE 100 for SRVCC in EPC mode from gNB 101A and NGCN to EUTRAN and EPC.

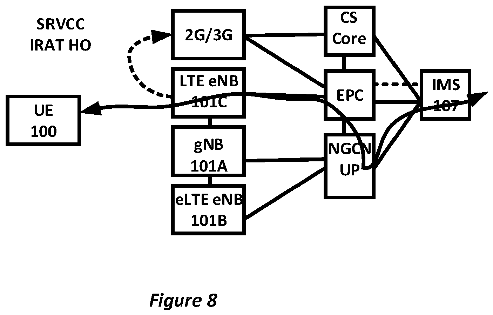

If the SM entity 103 determines that UP relocation is not required, the UE IP address and hence IMS registration are maintained and do not need to be updated by or for the UE 100, The MM entity 102 indicates in a handoff command to the MME that UP anchor relocation is not required. The MME in EPC forwards the handoff command to target eNB 101C in EUTRAN. The handoff command includes the lP address of the UP anchor in NGCN and if a VoLTE/Voice over IP session is in progress, it includes the necessary bearer parameters to establish the necessary bearers for the VoLTE session in EUTRAN. As the EPC/target eNB 101C completes the handover, the UP connection for transporting the voice media packets is established between the UE 100, EUTRAN eNB 101C and the UP anchor function in the NGCN bypassing the SGW and PGW in the EPC. Alternatively, the eNB 101C may establish the S1-U user plane connection to the SGW in EPC, The SGW would then establish the connection(s) to the UP anchor function in NGCM establishing a user plane path from the UE 100 to packet data network and IMS through eNB 101C, bypassing the PGW in EPC. Figure 8 illustrates an example of UE anchor maintained at NGCN following the handover to EUTRAN for SRVCC.

If, on the other hand, the SM entity 103 determines that UP anchor should be relocated to the PGW in EPC at handover for SRVCC in EPC mode, the SM entity 103 responds to the MM entity 102 indicating that UP anchor relocation is required. When the MM entity 102 sends a handoff command or similar, to the MME in EPC. it would indicate that UP anchor relocation to PGW is required and if a VoLTE/Voice over IP session is in progress at NGCN, the handoff command includes necessary VoLTE/Voice over IP connection context established at UP anchor in NGCN (e.g., QoS) for the established VoLT E/Voice over IP session. When the EUTRAN receives the handover command, an Evolved packet system, EPS, bearer is established between the UE 100 and the PGW through the eNB 101C and the SGW, The PGW becomes the new anchor for the voice over IP/VoLTE session. The UE IP address may be changed due to UP anchor relocation if NGCN and EPC do not share a common address pool, If the IP address is changed at UP anchor relocation, and the UE is either in IMS registered state or engaged in a VoLTE/voice over IP session, the UE may need to update its IMS registration using the new IP address and may update the other end-point of the VoLTE/Voice over IP session.

Relocating the UP anchor during handover for SRVCC in EPC mode while a VoLTE/Voice over IP call is in progress may not be effective due to the delay and loss resulting from relocation of the UP anchor and potential change of the IP address that require additional IMS signaling for updating the IMS and the other end-point of the voice session. Therefore, it would be preferable to perform UP anchor relocation if handover for SRVCC in EPC mode is triggered prior to establishment of the VoLTE\Voice over lP session, i.e., following the UE attach in NGCN with presence of the SRVCC in EPC mode indicator.

### 2. An exemplary method executed at New RAN nodes. gNB for determining handoff for SRVCC from EUTRAN/eNB

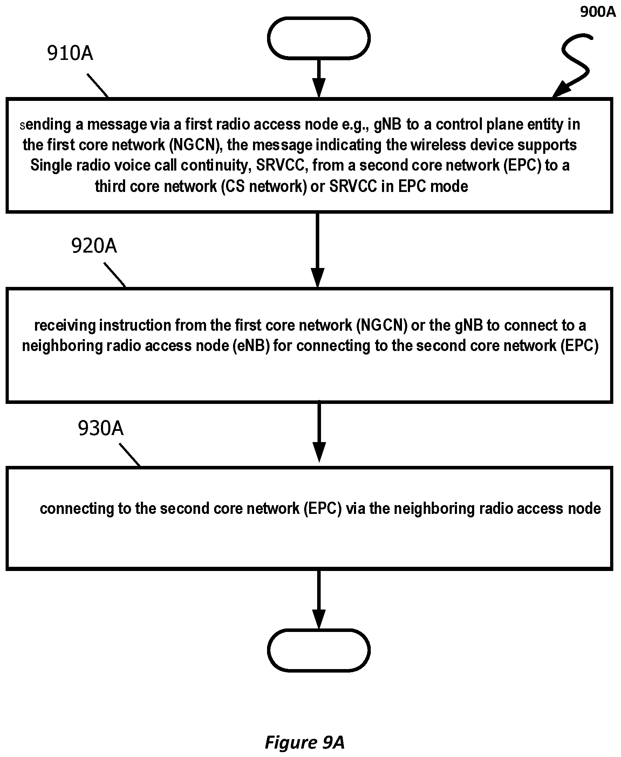

Figure 9A illustrates an exemplary method 900A executed at a wireless device or UE that supports SRVCC but connects to a core network via gNB that do not support SRVCC to UTRAN/GERAN and CS network. At step 910A, the UE sends a message to the NGCN via the gNB and the message includes an indication that the UE supports SRVCC in EPC mode, The UE may specify support for SRVCC from EUTRAN to UTRAN/GERAN/CDMA, and may include the supported frequencies and may include the iRAT-ParametersUTRA specified in 3GPP TS 36.331. The IRAT-ParametersUTRA is sent to gNB to indicate the type of actual SRVCC capabilities supported by the UE 100 which may include:
- srvcc-FromUTRA-FDD-ToGERAN: Indicates whether UE supports SRVCC handover from UTRAFDD PS HS to GERAN CS and/or
- srvcc-FromUTRA-FDD-ToUTRA-FDD: indicates whether UE supports SRVCC handover from UTRA FDD PS HS to UTRA FDD CS and/or
- srvcc-FromUTRA-TDD128-ToGERAN: Indicates whether UE supports SRVCC handover from UTRA TDD 1.28Mcps PS HS to GERAN CS and/or
- srvcc-FromUTRA-TDD128-ToUTRA-TDD128: indicates whether UE supports SRVCC handover from UTRA TDD 1.28Mcps PS HS to UTRA TDD 1.28Mcps CS,

The message may be an attach or a connection request or other, The connection request or the attach message may include an indication that the connection is for a VolP connection as well.

If the UE is allowed to continue over NGCN, it may, at one point request establishment of a VolP session and establish VoIP bearer.

At step 920A, the UE receives an instruction from the gNB or the NGCN to handover to a neighboring eNB that supports SRVCC or to release the connection with gNB and connect to eNB. The UE may receive a handover instruction if it has established a user plane connection, or has established a VolP connection with NGCN, or it may receive a release and connect or release and redirect if the UE has not yet established any user plane connection with NGCN. Alternatively, the UE may receive an attach reject with an appropriate release code indicating to the UE to connect to an eNB and EPC using the EPC Non Access Stratum protocol. At step 930A, the UE connects to the eNB as indicated at step 920A. Once the VolP connection is established over eNB and EPC, the eNB and EPC will subsequently provide SRVCC if the UE moves outside the coverage of LTE The procedures for providing SRVCC from EUTRAN (eNB), EPC to UTRAN/GERAN and CS network are as specified in 3GPP TS 23.216.

### 3. An exemplary method executed at New RAN nodes, gNB for determining handoff for SRVCC from EUTRAN/eNB

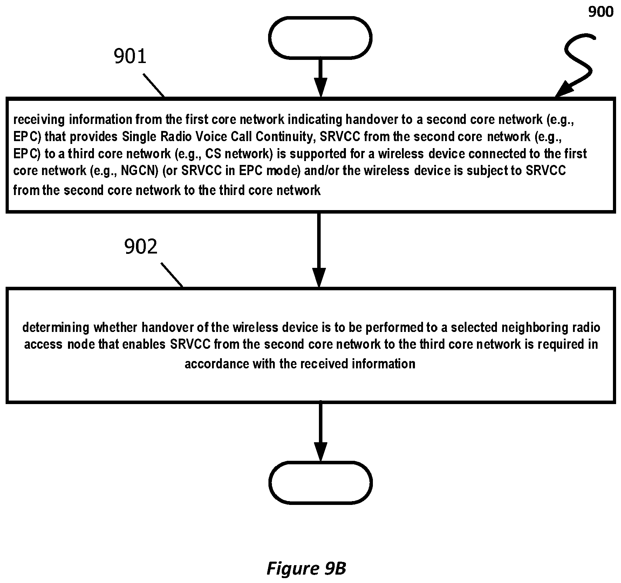

Figure 9B illustrates an exemplary method 900 executed at a New RAN node e.g., a gNB connected to NGCN, for determining if handover of a UE connected to NGCN through gNB is required. Again, the embodiment is described with gNB but applies to any node that connects to NGCN.

The gNB receives a message from a UE that comprises an attach request to forward to the MM entity in NGCN. The message may include an indication that it supports SRVCC from EUTRAN to UTRAN/GERAN/CDMA, may include the supported frequencies and may include the IRAT-ParametersUTRA specified in 3GPP TS 36.331. The IRAT-ParametersUTRA is sent to gNB to indicate the type of actual SRVCC capabilities supported by the UE 100 which may include:
- srvcc-FromUTRA-FDD-ToGERAN: Indicates whether UE supports SRVCC handover from UTRA FDD PS HS to GERAN CS and/or
- srvcc-FromUTRA-FDD-ToUTRA-FOD: Indicates whether UE supports SRVCC handover from UTRA FDD PS HS to UTRA FDD CS and/or
- srvcc-FromUTRA-TDD128-ToGERAN: Indicates whether UE supports SRVCC handover from UTRA TDD 1,28Mcps PS HS to GERAN CS and/or
- srvcc-FromUTRA-TDD128-ToUTRA-TDD128: Indicates whether UE supports SRVCC handover from UTRA TDD 1.28Mcps PS HS to UTRA TDD 1.28Mcps CS.

The gNB stores the information received from the UE, selects an MM entity (which may be part of a network slice selection) and towards the attach request message to the MM entity.

Step 901: the gNB receives a message from the MM entity in response to the attach request. The message may include "support of SRVCC in EPC mode (aka. SRVCC from EUTRAN)" or similar indication to indicate that the UE and the NGCN support handover to EUTRAN for the purpose of enabling subsequent SRVCC handover from EUTRAN to CS UTRAN/GERAN connected to a CS core network. It would be understood that the indication may be provided to the gNB in:
- Any message during or after the attach procedure. An example of message carrying the indication may be UE context setup or context modification message or similar, or
- an embedded indication in a UE radio capabilities information element or similar included in an appropriate message and transmitted to the gNB 101A from the MM entity 102.

The gNB 101A stores the received indicator from NGCN indicating support for "SRVCC in EPC mode". Note that the indicator may be updated at any time by the MM entity. The gNB may, at this time, determine based on the indicator received in this step that UE should be handed over immediately to a neighboring radio access node (e.g. EUTRAN) that supports SRVCC and may perhaps select a neighboring radio access node that has SRVCC capabilities that are compatible with the SRVCC capabilities of the UE if previously received. Additionally, the neighboring radio access node that is selected must be connected to an SRVCC capable EPC. This information could be pre-configured in the gNB or may be received over an inter-RAT interface from the neighboring base stations or may be configured via network management In this exemplary method, the gNB determined not to immediately trigger a handover of the UE to neighboring radio access nodes that operate in EPC mode only until it has received an indication that the UEs intends to establish or is establishing a Voice over IP call.

The gNB may receive a second indicator indicating the UE is now "subject to SRVCC from EUTRAN" or similar. The second indicator can be used to indicate that the UE is establishing or will establish a VoLTE or Voice over IP session or that the VoLTE/Voice over IP session is already established. The second indicator may also indicate "voice call continuity from EPC" or voice call continuity enabled for the UE. The gNB may receive the second indicator at the same time as the indicator received at step 901, i.e., during the attach procedure or in a different message outside the attach procedure. The information may be received prior or after establishment of the VoLTE/VolP user plane QoS connection for transporting the corresponding voice media packets.

Step 902: the gNB determines, after reception of the second indicator, whether the UE should be handed over to a neighboring EUTRAN radio access node (e,g. EUTRAN) that supports SRVCC and where the neighboring radio access node must be connected to an SRVCC capable EPC. Such determination could be based on (but not limited to):
- 1) radio network policy indicating whether 5G or NR coverage for VoLTE is ubiquitous or not, and/or
- 2) received QoS request indicating QoS for voice media connection or explicit indication that UE is subject to SRVCC and/or
- 3) the stored indication "support of SRVCC in EPC mode (aka. SRVCC from EUTRAN) previously received at step 702 and/or
- 4) if received from the UE at step 700 of Figure 7, the stored indication SRVCC from EUTRAN to UTRAN/GERAN/CDMA, the supported frequencies and actual SRVCC capabilities of the UE that may be received in the IRAT-ParametersUTRA. described in the background as the selected neignboring radio access node could be selected on the basis of compatibility with the UE SRVCC capabilities, and/or
- 5) RAT priority for voice service, and/or
- 6) Voice call continuity requirements.

If gNB determined that handover to EUTRAN/EPC for the purpose of SRVCC is required and the user plane has already been established for the UE in NGCN, the gNB connected to NGCN sends a handover request to initiate handover to the eNB. Alternatively. the gNB may also keep the call on NR (gNB 101A) if the radio conditions/coverage do not require a handover to EUTRAN for SRVCC to 2G/3G. However, if these radio conditions are changing, then the handover from New RAN/NGCN to LTE/EPC is initiated. If the user plane is not established, the gNB instructs the UE to move to the neighboring eNB and sends a release to the NGCN.

### 4.An exemplary method executed at control plane, CP, entity for supporting handoff for SRVCC from EUTRAN/eNB

Figure 10 illustrates an exemplary method 1000 executed at a control plane entity in NGCN interfacing with the UE via NG1 interface over gNB. The method enables handover of the UE to EUTRAN and EPC and allowing the UE to operate in EPC mode (i.e., connect over LTE NAS to EPC) and receive SRVCC service when required. In this disclosure we refer to the control plane entity as the MM entity that handles mobility management

Step 1001: The MM entity receiving from the UE over the NG1 interface an indication that it supports SRVCC from EUTRAN or it is capable to handle SRVCC in EPC mode. The indication is received in initial attach message, or other appropriate messages received over the NG1 interface or it may be received from gNB.

Step 1002: The MMentity executes the step of processing the attach request and makes the following determinations:
- If Voice over IP support is not mandatory by default in NGCN, the MM entity indicates to the UE if NGCN is configured to support Voice over IP.
- If Voice over IP support is mandatory by default in NGCN, then voice support indication does not need to be explicitly signaled to the UE.
- The MM entity may signal to the gNB two separate indications. The first and second indications may be sent in the same message towards the gNB or at different times in different messages.
   o The first indication relates to "support of SRVCC in EPC mode (aka. SRVCC from EUTRAN)" to indicate that the UE and the NGCN support handover to EUTRAN for the purpose of enabling SRVCC handover from EUTRAN to CS UTRAN/GERAN. This indication is preferably sent to the gNB at the time the UE is attached or it may be sent at any other time over different messages. This is a different indication than the one received in the attach request from the UE as it indicates support by both UE and NGCN of handover for SRVCC in EPC mode (aka. SRVCC from EUTRAN). The value of the indicator may indicate (supported/not supported) by the MM entity. The MM entity updates the gNB when the value of the indicator is changed.
   o The second indication determined or obtained by the MM entity is used to indicate that the UE is "subject to SRVCC from EUTRAN" (also subject to SRVCC in EPC mode"). The second indication can be used if the MM entity has obtained information from the UE and/or other NGCN entities that the UE is establishing or will establish a VoLTE/VolP session. The second indication may be sent from the MM entity to the gNB during the UE attach procedure or QoS request messages or other messages that may be supported between the MM entity and gNB to indicate the UE intent to establish an VoLTE/VoIP session. More specifically, the MM entity could be able to determine the value of the second indicator even prior to establishment of the VoLTE/VoIP session. The MM entity may use the following information to determine the second indicator:
      - information from the attach/registration message indicating UE is attached to receive IMS services (e.g.. IMS VoLTE/Voice over IP Access point name, APN or similar), and/or
      - information from a subscriber database as part of the subscription profile that the UE profile indicate voice call continuity is required, or that the user is simply allowed for voice services, and/or
      - information from a policy control server function as part of the subscription profile and network policy. Information include, voice service continuity required or voice services to be provided to the UE.
      Alternatively, the MM entity may determine the second indication only when the UE is in the process of establishing a VoLTE/VoIP session or when the UE registers with IMS. The MM entity may obtain that information from a policy control function. When the IMS Application Function, AF, receives the request to setup a VolTE/VolP session for the UE or an IMS registration from the UE, it signals to the policy control function (for example via the NG5 interface) an indication that the UE is either establishing a voice over IP session or is registering to receive or originate a voice over iP session with IMS. The policy control function informs the MM entity accordingly indicating that the UE is subject to SRVCC from EUTRAN due to the VoLTE/VolP service being setup or is being established or is likely to be requested (e.g., due to IMS registration). The MM entity determines if it should inform the radio access node (gNB) that the UE is subject to SRVCC in EPC mode and may use other information such as voice call continuity is required as part of the received profile or operator configuration. The MM entity sends the second indicator to the gNB to which the UE is connected indicating the UE is subject to SRVCC in EPC mode. This would allow the gNB to determine if the UE should be handover immediately to a neighboring radio access node (e.g. EUTRAN) that supports SRVCC in EPC mode or that is able to subsequently handover to a radio access node that supports SRVCC in EPC mode.

Step 1003: If user plane is already established for the UE, then Upon receiving a handoff request message indicating handover to EUTRAN/EPC for SRVCC, the MM entity executes the step of determining if UP anchor relocation is required. The MM entity initiates sending a message to the SM entity to request if UP anchor relocation from NGCN to EPC is required. Alternatively, the MM entity may obtain that information from the policy control function Upon determining if UP anchor relocation is required (see details in section 1. *Description of UP anchor relocation determination at handover for SRVCC from New RAN* and *NGCN to EUTRAN and EPG*)*,*the MM entity sends a handoff command or a similar message towards the target LTE eNB (target EUTRAN) via interworking with MME in EPC indicating if UP anchor relocation is required or not. The MM entity may include in the handoff command information indicating the required EPS bearer(s) to setup (If IMS VoLTE/VoIP session is established or is being established, the corresponding QoS for the voice session may be included) and may indicate that the voice call may be subject to actual SRVCC handover to CS network. If the user plane is not already established for the UE, i.e., if the gNB determines to move the UE after receiving the first indicator, then the MM entity will receive a proper indication to release the UE context. And no further action is required.

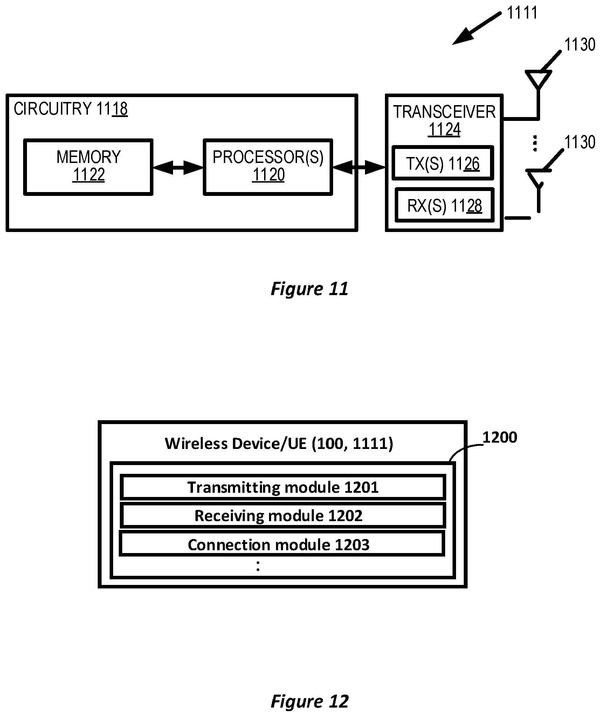

Figure 11 is a schematic block diagram of an exemplary wireless device/UE 1111, in accordance with certain embodiments described herein. Wireless device 1111 includes circuitry 1118 which may comprise one or more transceivers 1124 to facilitate transmitting wireless signals to and receiving wireless signals from radio access node 1120. Each transceiver 1124 include one or more transmitter 1126 and one or more receiver 1128 coupled to one or more antennas 1130. The circuitry 1118 also comprises one or more processors 1120 and a memory 1122.

The one or more processors may include any suitable combination of hardware and software implemented in one or more modules to execute instructions and manipulate data to perform some or all of the described functions of wireless device 1111, such as the functions of wireless device 1111 described above. In some embodiments, the one or more processors may include, for example, one or more computers, one or more central processing units (CPUs), one or more processors, one or more applications. one or more application specific integrated circuits (ASICs), one or more field programmable gate arrays (FPGAs) and/or other logic, in certain embodiments, the one or more processors may comprise one or more modules implemented in software. The module(s) provide functionality of the wireless device 1111 in accordance with the embodiments described herein, and in accordance with the steps executed at the wireless device 100 in Figure 7 In some embodiments, a computer program including instructions which, when executed by at least one processor, causes the at least one processor to carry out the functionality of the wireless device 1111 according to any of the embodiments described herein is provided, in some embodiments, a carrier comprising the aforementioned computer program product is provided, The carrier is one of an electronic signal, an optical signal, a radio signal, or a computer readable storage medium (e.g., a non-transitory computer readable medium such as memory).

The memory is generally operable to store instructions, such as a computer program, software, an application including one or more of logic, rules, algorithms, code, tables, etc. and/or other instructions capable of being executed by a one or more processors. Examples of memory include computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non-transitory computer-readable and/or computer-executable memory devices that store information, data, and/or instructions that may be used by the one or more processors of wireless device 1111.

Other embodiments of wireless device 1111 may include additional components beyond those shown in Figure 11 that may be responsible for providing certain aspects of the wireless device's functionality, including any of the functionality described above and/or any additional functionality (including any functionality necessary to support the solution described above). As just one example, wireless device 1111 may include input devices and circuits, output devices, and one or more synchronization units or circuits, which may be part of the one or more processors. Input devices include mechanisms for entry of data into wireless device 1111. For example, input devices may include input mechanisms, such as a microphone, input elements, a display, etc. Output devices may include mechanisms for outputting data in audio, video and/or hard copy format. For example, output devices may include a speaker, a display, etc.

Figure 12 is a schematic block diagram of the wireless device/UE 1111 according to some other embodiments of the present disclosure. The wireless device 1111 includes one or more modules 1200 comprising a transmitting module 1201, receiving module 1202 and connecting module 1203, each of which is implemented in software. The module(s) 1200 provide the functionality of the wireless device/UE 1111 described herein.

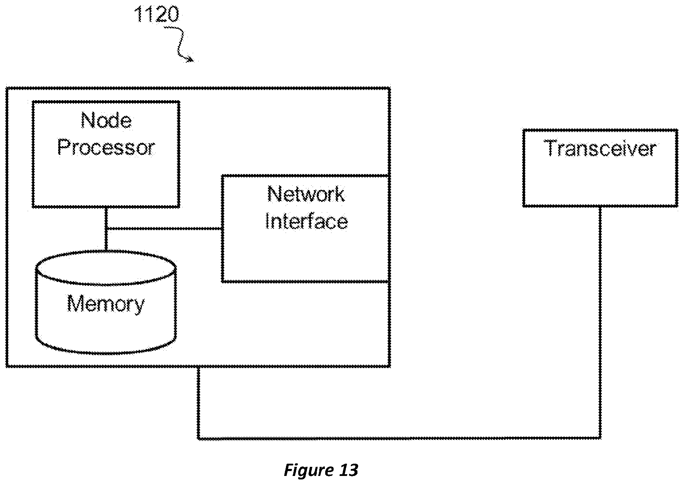

Figure 13 is a block diagram of an exemplary radio access node (e.g. gNB or eLTE eNB connected to NGCN) 1120, in accordance with certain embodiments. Radio access node 1120 includes circuitry which may include one or more of a transceiver, one or more processors, memory, and network interface. In some embodiments, the transceiver facilitates transmitting wireless signals to and receiving wireless signals from wireless device 1111/100 (e.g., via an antenna), the one or more processors executes instructions to provide some or all of the functionalities described above as being provided by a radio access node 1120, the memory stores the instructions for execution by the one or more processors, and she network interface communicates signals to backend network components, such as NGCN entities, a gateway, switch, router, internet, etc.

The one or more processors may include any suitable combination of hardware and software implemented in one or more modules to execute instructions and manipulate data to perform some or all of the described functions of radio access node 1120, such as those described above (gNB 101A, eLTE eNB 101B or eNB 101C). In some embodiments, the one or more processors may include, for example, one or more computers, one or more central processing units (CPUs), one or more processors, one or more applications, one or more application specific integrated circuits (ASICs), one or more field programmable gate arrays (FPGAs) and/or other logic In certain embodiments, the one or more processors may comprise one or more software modules that executes the method at the radio network node in accordance with Figure 9B and Figure 7.

The memory is generally operable to store instructions, such as a computer program, software, an application including one or more of logic, rules, algorithms, code, tables, etc. and/or other instructions capable of being executed by a one or more processors. Examples of memory include computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non-transitory computer-readable and/or computer-executable memory devices that store information.

In some embodiments, the network interface is communicatively coupled to the one or more processors and may refer to any suitable device operable to receive input for radio access node 1120, send output from radio access node 1120, perform suitable processing of the input or output or both, communicate to other devices, or any combination of the preceding. The network interface may include appropriate hardware (e.g., port, modem, network interface card, etc.) and software, including protocol conversion and data processing capabilities, to communicate through a network.

Other embodiments of radio access node 1120 may include additional components beyond those shown in Figure 13 that may be responsible for providing certain aspects of the radio network node's functionality, including any of the functionality described above and/or any additional functionality (including any functionality necessary to support the solutions described above). The various different types of network nodes may include components having the same physical hardware but configured (e.g., via programming) to support different radio access technologies, or may represent partly or entirely different physical components.

The one or more processors, interfaces, and memory similar to those described with respect to Figure 11 may be included in other network nodes (such as core network entities described herein). Other network nodes may optionally include or not include a wireless interface (such as the transceiver described in Figure 11). Functionalities described may reside within the same radio node or networks entities or may be distributed across a plurality of radios node and/or network entities.

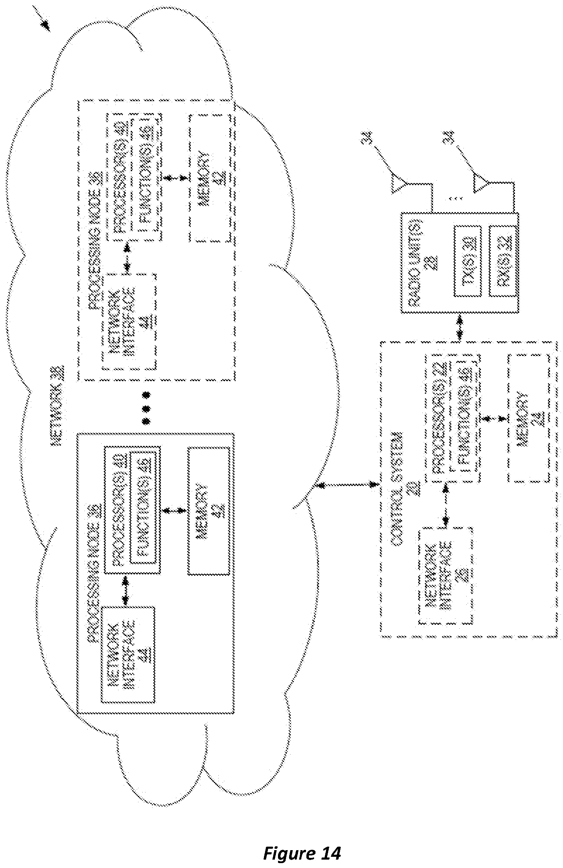

Figure 14 is a schematic block diagram that illustrates a virtualized embodiment of the radio access node 1120 according to some embodiments of the present disclosure. This discussion is equally applicable to the NGCN entities such as MM Entity, SM entity, policy control function, MME, PGW, SGW, etc.

As used herein, a "virtualized" radio access node 1120 is an implementation of the radio access node 1120 in which at least a portion of the functionality of the radio access node 1120 is implemented as a virtual componerit(s) (e.g., via a virtual machine(s) executing on a physical processing node(s) in a network(s)). As illustrated, in this example, the radio access node 1120 includes the control system 20 that includes the one or more processors 22 (e.g., CPUs, ASICs, FPGAs, and/or the like), the memory 24, and the network interface 26 and the one or more radio units 28 that each includes the one or more transmitters 30 and the one or more receivers 32 coupled to the one or more antennas 34. The control system 20 is connected to the radio unit(s) 28 via, for example, an optical cable or the like. The control system 20 is connected via the network interface 26 to one or more processing nodes 36 coupled to or included as part of a network(s) 38. Each processing node 36 includes one or more processors 40 (e.g., CPUs, ASICs, FPGAs, and/or the like), memory 42, and a network interface 44.

In this example, functions 46 of the radio access node 1120 described herein are implemented at the one or more processing nodes 36 or distributed across the control system 20 and the one or more processing nodes 36 in any desired manner. In some particular embodiments, some or all of the functions 46 of the radio access node 1120 described herein are implemented as virtual components executed by one or more virtual machines implemented in a virtual environments) hosted by the processing node(s) 36. As will be appreciated by one of ordinary skill in the art, additional signaling or communication between the processing node(s) 36 and the control system 20 is used in order to carry out at least some of the desired functions 46. Notably, in some embodiments, the control system 20 may not be included, in which case the radio unit(s) 28 communicate directly with the processing node(s) 36 via an appropriate network interface(s).

## Claims

1. A method performed by a wireless device (100, 1111) in a first core network, comprising:
- sending a message via a first radio access node (101A, 1120) to a control plane entity (102) in the first core network, the message indicating the wireless device (100, 1111) supports Single radio voice call continuity, SRVCC, from a second core network to a third core network;
- receiving, from the first radio access node (101A, 1120) or from the first core network, an instruction to connect to a neighboring radio access node (101C) for connecting to the second core network; and
- connecting to the second core network via the neighboring radio access node (101C),
wherein receiving the instruction comprises receiving a handover command, a handover order, a release with redirect or a registration reject message, and
wherein the first core network is a 5th generation core network, 5GCN, and the second core network is an evolved packet core, EPC, and the third core network is a circuit switched core network.

2. The method of claim 1 wherein the method further includes sending a radio message to the first radio access node connected to the first core network indicating supported wireless device SRVCC capabilities to at least one of Universal Terrestrial Radio Access Network, UTRAN, Global System for Mobile communication Edge Radio Access network, GERAN, and Code Division Multiplexing Access network, CDMA, from the second core network.

3. The method of claim 1 wherein the neighboring radio access node is a Long Term Evolution, LTE, evolved Node B, eNB, connected to the EPC network.

4. The method of claim 1 wherein the instruction is received at registration to the Internet Protocol multimedia subsystem, IMS, during establishment of a Voice over Internet Protocol, VoIP, session or after establishment of the VoIP session, or
wherein the instruction is received during registration of the wireless device to the first core network.

5. A wireless device (100, 1111) adapted to perform the method of any one of claims 1 to 4.

6. A method performed by a first radio access node (101A, 1120) in a wireless access network connected to a first core network, comprising:
- receiving information, from a control plane entity (102) in the first core network, indicating handover to a second core network that provides Single Radio Voice Call Continuity, SRVCC, from the second core network to a third core network is supported for a wireless device (100, 1111) connected to the first core network;- determining that handover of the wireless device (100, 1111) to a selected neighboring radio access node (101C) connected to the second core network that enables SRVCC from the second core network to the third core network is required in accordance with the received information; and
- sending, to the control plane entity (102), a handover request to initiate handover to the selected neighboring radio access node (101C),
wherein the first core network is a 5th generation core network, 5GCN, and the second core network is an evolved packet core, EPC, and the third core network is a circuit switched core network.

7. The method of claim 6, wherein the received information further indicates that the wireless device (100, 1111) is subject to SRVCC from the second core network to the third core network.

8. The method of claim 6, wherein the selected neighboring radio access node (101C) has SRVCC capabilities compatible with the wireless device SRVCC capabilities.

9. A radio access node (101A, 1120) in a wireless access network, the radio access node (101A, 1120) adapted to perform the method of any one of claims 6 to 8.

10. A method performed by a first control plane entity (102) in a first core network, comprising:
- receiving, from a wireless device (100, 1111), via a first radio access node (101A, 1120) in a wireless network connected to the first core network, a message indicating the wireless device (100, 1111) supports Single Radio Voice Call Continuity, SRVCC, from a second core network to a third core network;
- sending a radio access network message to the first radio access node (101A, 1120) indicating support of SRVCC from the second core network by the wireless device (100, 1111); and
- receiving, from the first radio access node (101A, 1120), an indication for relocating the wireless device (100, 1111) to the second core network or for releasing corresponding wireless device context,
wherein receiving the indication for relocating the wireless device (100, 1111) further comprises receiving a request indicating handover of the wireless device (100, 1111) to the second core network for SRVCC from the second core network to the third core network,
wherein the first core network is a 5th generation core network, 5GCN, and the second core network is an evolved packet core, EPC, and the third core network is a circuit switched core network.

11. The method of claim 10, further comprising determining that user plane anchor relocation to the second core network is required and sending a command to the second core network indicating handover of the wireless device (100, 1111) with user plane anchor relocation.

12. The method of claim 10, wherein the method further comprises determining the wireless device (100, 1111) is subject to SRVCC from the second core network to the third core network and informing the first radio access node (101A, 1120) accordingly.

13. The method of claim 11 or 12, wherein the step of determining is based on obtaining information comprising at least one of:
- an indication that Voice over Internet Protocol, VoIP, registration by the wireless device, or
- an indication that VoIP session is established, or
- an indication that the wireless device is attached to the first core network to receive VoIP services, or - voice call continuity service is enabled for the wireless device.

14. A first control plane entity (102) in a first core network, the first control plane entity adapted to perform the method of any one of claims 10 to 13.

## Patentansprüche

1. Verfahren, das von einer drahtlosen Vorrichtung (100, 1111) in einem ersten Kernnetzwerk durchgeführt wird und umfasst:
- Senden einer Nachricht über einen ersten Funkzugangsknoten (101A, 1120) an eine Steuerebenen-Entität (102) im ersten Kernnetzwerk, wobei die Nachricht angibt, dass die drahtlose Vorrichtung (100, 1111) Einzelfunksprachverbindungskontinuität, SRVCC, von einem zweiten Kernnetzwerk zu einem dritten Kernnetzwerk unterstützt;
- Empfangen einer Anweisung vom ersten Funkzugangsknoten (101A, 1120) oder vom ersten Kernnetzwerk zum Herstellen einer Verbindung mit einem Nachbar-Funkzugangsknoten (101C) zum Anschluss an das zweite Kernnetzwerk; und
- Anschließen an das zweite Kernnetzwerk über den Nachbar-Funkzugangsknoten (101C),
wobei das Empfangen der Anweisung ein Empfangen eines Übergabebefehls, einer Übergabeanordnung, einer Freigabe mit Umleitung oder einer Registrierungsablehnungsnachricht umfasst, und
wobei das erste Kernnetzwerk ein Kernnetzwerk der 5. Generation, 5GCN, ist, und das zweite Kernnetzwerk ein evolvierter Paketkern, EPC, ist, und das dritte Kernnetzwerk ein leitungsvermitteltes Kernnetzwerk ist.

2. Verfahren nach Anspruch 1, wobei das Verfahren ferner ein Senden einer Funknachricht, die unterstützte SRVCC-Fähigkeiten der drahtlosen Vorrichtung für mindestens eines des universellen terrestrischen Funkzugangsnetzwerks, UTRAN, des globalen Systems für Mobilkommunikation/Edge-Funkanschlussnetzwerk, GERAN, und einem Netzwerk mit Codemultiplexzugriff, CDMA, angibt, vom zweiten Kernnetzwerk an den ersten Funkzugangsknoten umfasst, der an das erste Kernnetzwerk angeschlossen ist.

3. Verfahren nach Anspruch 1, wobei der Nachbar-Funkzugangsknoten ein evolvierter Long-Term-Evolution-,LTE-,Knoten B, eNB, ist, der an das EPC-Netzwerk angeschlossen ist.

4. Verfahren nach Anspruch 1, wobei die Anweisung bei Registrierung beim Internetprotokoll-Multimedia-Subsystem, IMS, während des Aufbaus einer Sprache-über-Internetprotokoll-,VoIP-,Sitzung oder nach dem Aufbau einer VoIP-Sitzung empfangen wird, oder
wobei die Anweisung während der Registrierung der drahtlosen Vorrichtung beim ersten Kernnetzwerk empfangen wird.

5. Drahtlose Vorrichtung (100, 1111), die zum Durchführen des Verfahrens nach einem der Ansprüche 1 bis 4 ausgelegt ist.

6. Verfahren, das von einem ersten Funkzugangsknoten (101A, 1120) in einem drahtlosen Zugangsnetzwerk, der an ein erstes Kernnetzwerk angeschlossen ist, durchgeführt wird und umfasst:
- Empfangen von Informationen von einer Steuerebenen-Entität (102) im ersten Kernnetzwerk, die angeben, dass Übergabe an ein zweites Kernnetzwerk, das Einzelfunksprachverbindungskontinuität, SRVCC, vom zweiten Kernnetzwerk zu einem dritten Kernnetzwerk bereitstellt, für eine drahtlose Vorrichtung (100, 1111) unterstützt wird, die an das erste Kernnetzwerk angeschlossen ist;
- Bestimmen, dass Übergabe der drahtlosen Vorrichtung (100, 1111) an einen ausgewählten Nachbar-Funkzugangsknoten (101C), der an das zweite Kernnetzwerk angeschlossen ist, das SRVCC vom zweiten Kernnetzwerk zum dritten Kernnetzwerk ermöglicht, gemäß den empfangenen Informationen angefordert wird; und
- Senden einer Übergabeanforderung an die Steuerebenen-Entität (102) zum Initiieren von Übergabe an den ausgewählten Nachbar-Funkzugangsknoten (101C),
wobei das erste Kernnetzwerk ein Kernnetzwerk der 5. Generation, 5GCN, ist, und das zweite Kernnetzwerk ein evolvierter Paketkern, EPC, ist, und das dritte Kernnetzwerk ein leitungsvermitteltes Kernnetzwerk ist.

7. Verfahren nach Anspruch 6, wobei die empfangenen Informationen ferner angeben, dass die drahtlose Vorrichtung (100, 1111) einer SRVCC vom zweiten Kernnetzwerk zum dritten Kernnetzwerk bedarf.

8. Verfahren nach Anspruch 6, wobei der ausgewählte Nachbar-Funkzugangsknoten (101C) SRVCC-Fähigkeiten aufweist, die mit den SRVCC-Fähigkeiten der drahtlosen Vorrichtung kompatibel sind.

9. Funkzugangsknoten (101A, 1120) in einem drahtlosen Zugangsnetzwerk, wobei der Funkzugangsknoten (101A, 1120) zum Durchführen des Verfahrens nach einem der Ansprüche 6 bis 8 ausgelegt ist.

10. Verfahren, das von einer ersten Steuerebenen-Entität (102) in einem ersten Kernnetzwerk durchgeführt wird und umfasst:
- Empfangen einer Nachricht, die angibt, dass eine drahtlose Vorrichtung (100, 1111) Einzelfunksprachverbindungskontinuität, SRVCC, von einem zweiten Kernnetzwerk zu einem dritten Kernnetzwerk unterstützt, von der drahtlosen Vorrichtung (100, 1111) über einen ersten Funkzugangsknoten (101A, 1120) in einem drahtlosen Netzwerk, das mit dem ersten Kernnetzwerk verbunden ist;
- Senden einer Funkzugangsnetzwerknachricht, die Unterstützung von SRVCC vom zweiten Kernnetzwerk durch die drahtlose Vorrichtung (100, 1111) angibt, an den ersten Funkzugangsknoten (101A, 1120); und
- Empfangen einer Angabe vom ersten Funkzugangsknoten (101A, 1120) zur Verlegung der drahtlosen Vorrichtung (100, 1111) zum zweiten Kernnetzwerk oder zur Freigabe eines entsprechenden Kontexts der drahtlosen Vorrichtung,
wobei das Empfangen der Angabe zur Verlegung der drahtlosen Vorrichtung (100, 1111) ferner ein Empfangen einer Anforderung umfasst, die Übergabe der drahtlosen Vorrichtung (100, 1111) an das zweite Kernnetzwerk für SRVCC vom zweiten Kernnetzwerk zum dritten Kernnetzwerk angibt,
wobei das erste Kernnetzwerk ein Kernnetzwerk der 5. Generation, 5GCN, ist, und das zweite Kernnetzwerk ein evolvierter Paketkern, EPC, ist, und das dritte Kernnetzwerk ein leitungsvermitteltes Kernnetzwerk ist.

11. Verfahren nach Anspruch 10, ferner umfassend ein Bestimmen, dass Benutzerebenen-Ankerverlegung zum zweiten Kernnetzwerk erforderlich ist, und Senden eines Befehls, der Übergabe der drahtlosen Vorrichtung (100, 1111) mit Benutzerebenen-Ankerverlegung angibt, an das zweite Kernnetzwerk.

12. Verfahren nach Anspruch 10, wobei das Verfahren ferner ein Bestimmen, dass die drahtlose Vorrichtung (100, 1111) einer SRVCC vom zweiten Kernnetzwerk zum dritten Kernnetzwerk bedarf, und dementsprechendes Informieren des ersten Funkzugangsknotens (101A, 1120) umfasst.

13. Verfahren nach Anspruch 11 oder 12, wobei der Schritt des Bestimmens auf einem Erhalten von Informationen basiert, die mindestens eines umfassen von:
- einer Angabe, dass Sprache-über-Internetprotokoll-,VoIP-,Registrierung durch die drahtlose Vorrichtung, oder
- einer Angabe, dass eine VoIP-Sitzung aufgebaut wird, oder
- einer Angabe, dass die drahtlose Vorrichtung an das erste Kernnetzwerk angeschlossen wird, um VoIP-Dienste zu empfangen, oder
- dass ein Sprachverbindungskontinuitätsdienst für die drahtlose Vorrichtung aktiviert wird.

14. Erste Steuerebenen-Entität (102) in einem Kernnetzwerk, wobei die Steuerebenen-Entität zum Durchführen des Verfahrens nach einem der Ansprüche 10 bis 13 ausgelegt ist.

## Revendications

1. Procédé réalisé par un dispositif sans fil (100, 1111) dans un premier réseau central, comprenant :
- l'envoi d'un message via un premier nœud d'accès radio (101A, 1120) à une entité de plan de commande (102) dans le premier réseau central, le message indiquant que le dispositif sans fil (100, 1111) prend en charge une continuité d'appel vocal radio unique, SRVCC, d'un deuxième réseau central à un troisième réseau central ;
- la réception, depuis le premier nœud d'accès radio (101A, 1120) ou depuis le premier réseau central, d'une instruction de liaison à un nœud d'accès radio voisin (101C) pour une liaison au deuxième réseau central ; et
- la liaison au deuxième réseau central via le nœud d'accès radio voisin (101C),
dans lequel la réception de l'instruction comprend la réception d'une commande de transfert intercellulaire, d'un ordre de transfert intercellulaire, d'une libération avec redirection ou d'un message de rejet d'enregistrement, et
dans lequel le premier réseau central est un réseau central de 5^{ième} génération, 5GCN, et le deuxième réseau central est un coeur paquet évolué, EPC, et le troisième réseau central est un réseau central à commutation de circuits.

2. Procédé selon la revendication 1, dans lequel le procédé comprend en outre l'envoi d'un message radio au premier nœud d'accès radio relié au premier réseau central indiquant des capacités SRVCC de dispositif sans fil prises en charge à au moins l'un parmi un réseau d'accès radio terrestre universel, UTRAN, un réseau d'accès radio Edge de système mondial de communication mobile, GERAN, et un réseau d'accès à multiplexage par répartition de code, CDMA, depuis le deuxième réseau central.

3. Procédé selon la revendication 1, dans lequel le nœud d'accès radio voisin est un nœud B évolué, eNB, d'évolution à long terme, LTE, relié au réseau EPC.

4. Procédé selon la revendication 1, dans lequel l'instruction est reçue à un enregistrement au sous-système multimédia de protocole Internet, IMS, au cours d'un établissement d'une session de voix sur protocole Internet, VoIP, ou après un établissement de la session VoIP, ou
dans lequel l'instruction est reçue au cours d'un enregistrement du dispositif sans fil au premier réseau central.

5. Dispositif sans fil (100, 1111) apte à réaliser le procédé selon l'une quelconque des revendications 1 à 4.

6. Procédé réalisé par un premier nœud d'accès radio (101A, 1120) dans un réseau d'accès sans fil relié à un premier réseau central, comprenant :
- la réception d'informations, depuis une entité de plan de commande (102) dans le premier réseau central, indiquant qu'un transfert intercellulaire à un deuxième réseau central qui assure une continuité d'appel vocal radio unique, SRVCC, du deuxième réseau central à un troisième réseau central est pris en charge pour un dispositif sans fil (100, 1111) relié au premier réseau central ;
- la détermination qu'un transfert intercellulaire du dispositif sans fil (100, 1111) à un nœud d'accès radio voisin (101C) sélectionné relié au deuxième réseau central qui active SRVCC du deuxième réseau central au troisième réseau central est exigé en fonction des informations reçues ; et
- l'envoi, à l'entité de plan de commande (102), d'une demande de transfert intercellulaire pour initier un transfert intercellulaire au nœud d'accès radio voisin (101C) sélectionné,
dans lequel le premier réseau central est un réseau central de 5^{ième} génération, 5GCN, et le deuxième réseau central est un coeur paquet évolué, EPC, et le troisième réseau central est un réseau central à commutation de circuits.

7. Procédé selon la revendication 6, dans lequel les informations reçues indiquent en outre que le dispositif sans fil (100, 1111) est soumis à SRVCC du deuxième réseau central au troisième réseau central.

8. Procédé selon la revendication 6, dans lequel le nœud d'accès radio voisin (101C) sélectionné comporte des capacités SRVCC compatibles avec les capacités SRVCC de dispositif sans fil.

9. Noeud d'accès radio (101A, 1120) dans un réseau d'accès sans fil, le nœud d'accès radio (101A, 1120) étant apte à réaliser le procédé selon l'une quelconque des revendications 6 à 8.

10. Procédé réalisé par une première entité de plan de commande (102) dans un premier réseau central, comprenant :
- la réception, depuis un dispositif sans fil (100, 1111), via un premier nœud d'accès radio (101A, 1120) dans un réseau sans fil relié au premier réseau central, d'un message indiquant que le dispositif sans fil (100, 1111) prend en charge une continuité d'appel vocal radio unique, SRVCC, d'un deuxième réseau central à un troisième réseau central ;
- l'envoi d'un message de réseau d'accès radio au premier nœud d'accès radio (101A, 1120) indiquant la prise en charge de SRVCC depuis le deuxième réseau central par le dispositif sans fil (100, 1111) ; et
- la réception, depuis le premier nœud d'accès radio (101A, 1120), d'une indication de relocalisation du dispositif sans fil (100, 1111) au deuxième réseau central ou de libération d'un contexte de dispositif sans fil correspondant,
dans lequel la réception de l'indication de relocalisation du dispositif sans fil (100, 1111) comprend en outre la réception d'une demande indiquant un transfert intercellulaire du dispositif sans fil (100, 1111) au deuxième réseau central pour SRVCC du deuxième réseau central au troisième réseau central,
dans lequel le premier réseau central est un réseau central de 5^{ième} génération, 5GCN, et le deuxième réseau central est un coeur paquet évolué, EPC, et le troisième réseau central est un réseau central à commutation de circuits.

11. Procédé selon la revendication 10, comprenant en outre la détermination qu'une relocalisation d'ancrage de plan d'utilisateur au deuxième réseau central est exigée et l'envoi d'une commande au deuxième réseau central indiquant un transfert intercellulaire du dispositif sans fil (100, 1111) avec relocalisation d'ancrage de plan d'utilisateur.

12. Procédé selon la revendication 10, dans lequel le procédé comprend en outre la détermination que le dispositif sans fil (100, 1111) est soumis à SRVCC du deuxième réseau central au troisième réseau central et l'information du premier nœud d'accès radio (101A, 1120) en conséquence.

13. Procédé selon la revendication 11 ou 12, dans lequel l'étape de la détermination est basée sur l'obtention d'informations comprenant au moins l'une parmi :
- une indication d'un enregistrement de voix sur protocole Internet, VoIP, par le dispositif sans fil, ou
- une indication qu'une session VoIP est établie, ou
- une indication que le dispositif sans fil est rattaché au premier réseau central pour recevoir des services VoIP, ou
- un service de continuité d'appel vocal est activé pour le dispositif sans fil.

14. Première entité de plan de commande (102) dans un premier réseau central, la première entité de plan de commande étant apte à réaliser le procédé selon l'une quelconque des revendications 10 à 13.
